# EUROPÄISCHE PATENTSCHRIFT

(11) **EP 3 870 402 B1**
(45) Veröffentlichungstag und Bekanntmachung des Hinweises auf die Patenterteilung: **23.02.2022**
(21) Anmeldenummer: 20729052.9
(22) Anmeldetag: 27.05.2020
(51) Int. Cl.: B25B 33/00, B23B 45/00, B23B 31/26, B23B 29/04, B23B 29/20

(54) **BEDIENSCHLÜSSEL FÜR STEHENDE UND ANGETRIEBENE WERKZEUGHALTER**
OPERATING KEY FOR STATIONARY AND DRIVEN TOOL HOLDERS
CLÉ DE SERVICE POUR PORTE-OUTILS FIXES ET ENTRAÎNÉS

(30) Priorität: 06.06.2019 DE 102019115386
(43) Veröffentlichungstag der Anmeldung: 01.09.2021
(73) Patentinhaber: WTO Vermögensverwaltung GmbH, 77797 Ohlsbach (DE)
(72) Erfinder: VOGT, Matthias, 77704 Oberkirch (DE); JANSEN, Karlheinz, 77746 Schutterwald (DE)
(74) Vertreter: DREISS Patentanwälte PartG mbB
(86) Internationale Anmeldenummer: PCT/EP2020/064711
(87) Internationale Veröffentlichungsnummer: WO 2020/245000

(56) Entgegenhaltungen:
- EP-A1- 1 431 003
- EP-A2- 3 263 252
- US-A- 5 069 585
- US-A- 5 485 769
- US-A- 6 092 441
- US-A1- 2014 260 826

## Beschreibung

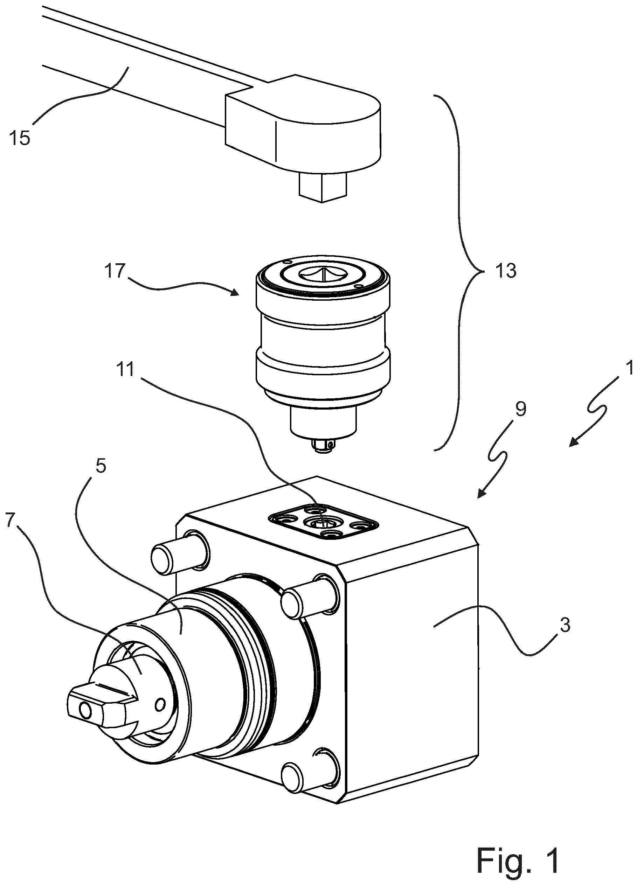

Die Erfindung betrifft eine Antriebs- und Verriegelungseinrichtung gemäß dem Oberbegriff des Anspruchs 1. Eine solche Antriebs- und Verriegelungseinrichtung ist aus der EP 3 263 252 A2 bekannt. Die Erfindung betrifft auch einen Bedienschlüssel gemäß Anspruch 17 sowie ein Verfahren gemäß Anspruch 18. Angetriebene und stehende Werkzeughalter sind seit vielen Jahren auf dem Markt. In der Figur 1 ist eine Isometrie eines solchen, in diesem Fall angetriebenen, Werkzeughalters exemplarisch dargestellt. Dieser Werkzeughalter 1 umfasst ein Gehäuse 3 mit einem Schaft 5 und eine Spindel 7.

Das Gehäuse 3 des Werkzeughalters 1 wird mit Schrauben an einem Revolver (nicht dargestellt) einer Werkzeugmaschine befestigt. Über einen Zweiflach oder auf andere Weise wird die Spindel 7 von einer Antriebswelle des Revolvers angetrieben.

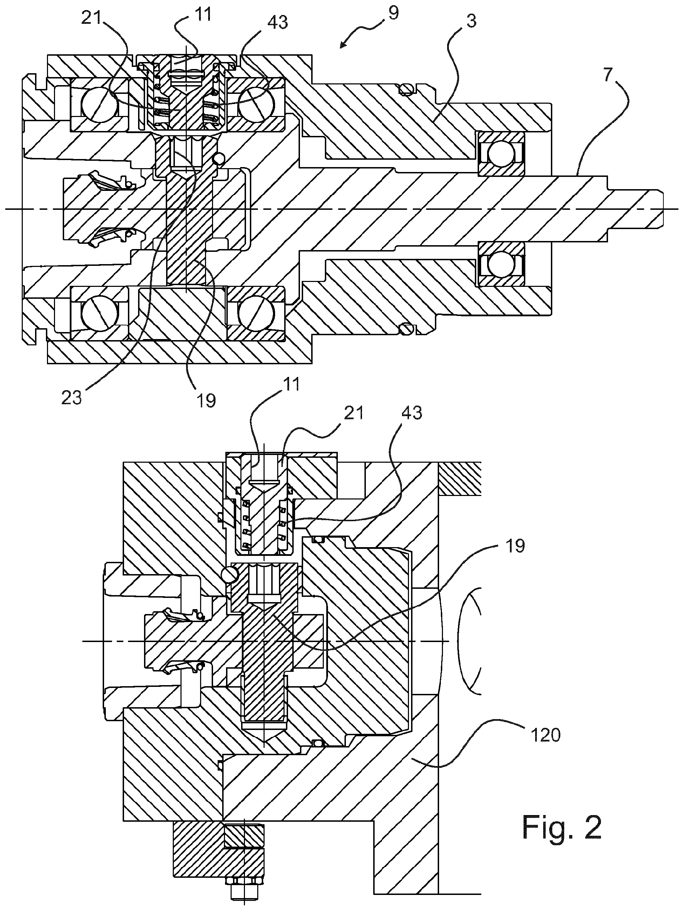

In der Spindel 7 wird ein Werkzeug, z.B. ein Bohrer oder ein Fingerfräser, aufgenommen und gespannt. Die Spannung des Werkzeugs kann entweder direkt oder über einen Werkzeugadapter erfolgen. Um ein Werkzeug oder einen Werkzeugadapter (beide nicht dargestellt) in der Spindel 7 zu spannen, ist in dem Werkzeughalter 1 unter anderem eine Betätigungseinrichtung 9 vorgesehen, die im Zusammenhang mit der Figur 2 näher erläutert wird.

Die Betätigungseinrichtung 9 umfasst bei dem dargestellten Ausführungsbeispiel einen Innensechskant 11, der mit einem Bedienschlüssel 13 zusammenwirkt. Üblicherweise wird als Bedienschlüssel ein Außensechskantschlüssel (umgangssprachlich auch als INBUS-Schlüssel bezeichnet) eingesetzt. Natürlich ist die Gestaltung nicht auf einen Innensechskant 11 beschränkt. Weitere Ausführungsformen, die für die Übertragung der Drehmomente geeignet sind, sind jederzeit denkbar (z.B. Außensechskant, Sechsrundprofile, Vierkantprofile, Zweiflachprofile, Polygonprofile, stirnseitige Mitnahmen usw.).

In der Figur 1 ist ein Ausführungsbeispiel eines erfindungsgemäßen Bedienschlüssels 13 dargestellt. Der erfindungsgemäße Bedienschlüssel 13 umfasst eine Drehmoment abgebende Einrichtung. Bei diesem Ausführungsbeispiel umfasst der Bedienschlüssel 13 einen Drehmomentschlüssel 15 (= Drehmoment abgebende Einrichtung) und eine erfindungsgemäße Antriebs- und Verriegelungseinheit 17. Die drehmomentabgebende Einrichtung kann zum Beispiel ein (starrer) Hebelarm, ein Schraubendreher, ein Drehmomentschlüssel, elektromechanisch, pneumatisch oder hydraulisch angetriebene Schrauber oder auch ein Industrieroboter sein. Durch den Drehmomentschlüssel 15 bzw. die Drehmoment abgebende Einrichtung wird die Antriebs- und Verriegelungseinheit 17 angetrieben. Die erfindungsgemäße Antriebs- und Verriegelungseinheit 17 ist kompatibel zu den verschiedensten Antrieben und kann auch in eine vollautomatisierte Fertigungsumgebung integriert werden.

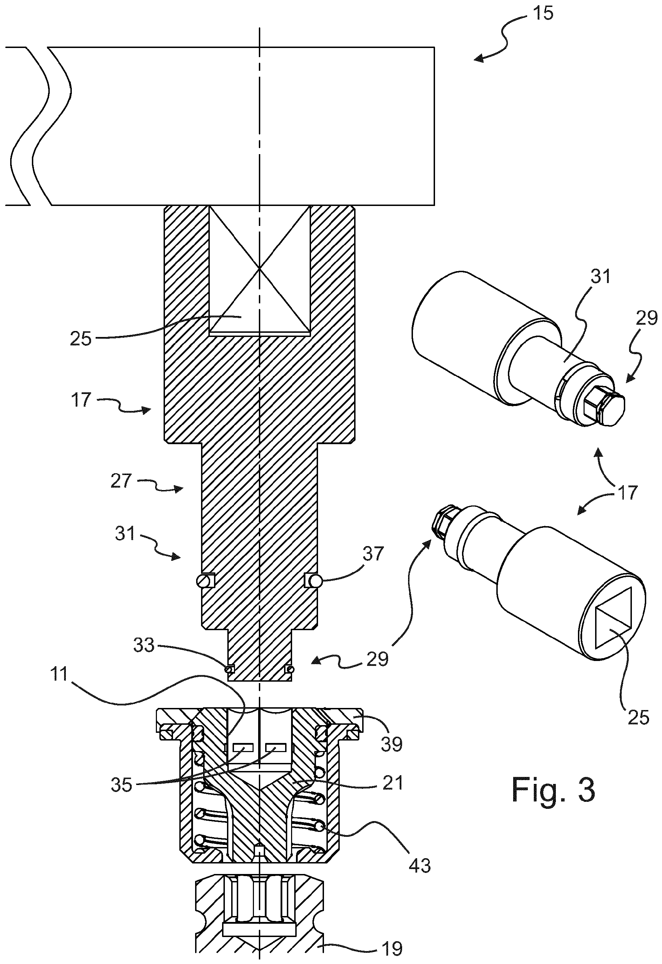

Die erfindungsgemäße Antriebs- und Verriegelungseinheit 17 wird nachfolgend anhand der Figuren 3 bis 10 noch im Detail dargestellt und erläutert. Sie hat bei dem in Figur 1 dargestellten Ausführungsbeispiel an ihrer Oberseite eine Ausnehmung mit quadratischem Querschnitt, die mit einem Vierkant des Drehmomentschlüssels 15 in an sich bekannter Weise zusammenwirkt. Am unteren Ende der Antriebs- und Verriegelungseinheit 17 (nachfolgend Antriebseinheit 17) ist ein Außensechskant ausgebildet, der mit dem Innensechskant 11 des angetriebenen Werkzeughalters zusammenwirkt. Das untere Ende der Antriebseinheit 17 muss mit dem Gegenstück (hier der Innensechskant 11) des angetriebenen Werkzeughalters 1 so zusammenwirken, dass das zum Lösen und Spannen des Werkzeugs in der Spindel 7 des Werkzeughalters 1 erforderliche Drehmoment sicher übertragen werden kann.

Im oberen Teil der Figur 2 ist ein Längsschnitt durch den angetriebenen Werkzeughalter 1 dargestellt.

Die Spindel 7 ist in dem Gehäuse 3 drehbar gelagert. Bei dem beispielhaft dargestellten Werkzeughalter 1 hat die Spindel 7 eine Werkzeugaufnahme für Werkzeuge und ein Spannsystem für Werkzeuge (Bohrer, Fingerfräser etc.), das unter dem Markennamen "Coromant Capto" seit mehreren Jahrzehnten angeboten und verkauft wird. Die "Coromant Capto"- Werkzeugaufnahme in der Spindel 7 des Werkzeughalters 1 ist ein Polygon. Dieses Spannsystem umfasst einen Exzenterspanner 19, der in der Spindel 7 angeordnet ist. Betätigt wird der Exzenterspanner 19 über die Betätigungseinrichtung 9. Wie sich aus der Figur 2 ergibt, umfasst die Betätigungseinrichtung 9 einen Bolzen 21. Dieser Bolzen 21 ist in dem Gehäuse 3 drehbar gelagert. Außerdem kann der Bolzen 21 mit Hilfe des Bedienschlüssels 13 in Richtung der Spindel 7 relativ zu dem Gehäuse bewegt werden. Ähnliche Spannsysteme gibt es auch in Verbindung mit anderen Werkzeugaufnahmen wie z.B. HSK, KM und vielen anderen mehr.

Der Bolzen 21 hat an seinem in der Figur 2 unteren Ende einen Außensechskant, der mit einem Innensechskant 23 des Exzenterspanners 19 kompatibel ist. Durch die Bewegung des Bolzens 21 in Richtung des Exzenterspanners 19 entsteht über den Außensechskant und den Innensechskant 23 eine formschlüssige Verbindung zwischen Bolzen 21 und Exzenterspanner 19. Darüber werden die zum Lösen und Spannen des Werkzeugs in der Spindel 7 erforderlichen Drehmomente übertragen. Anstelle des Außensechskants und des Innensechskants 23 können auch ein Außensechsrund und ein Innensechsrund oder ein Zweiflach und eine Quernut zur Drehmomentübertragung zwischen Bolzen 21 und Exzenterspanner 19 vorgesehen sein. Darüber hinaus sind weitere Schnittstellen zur Drehmomentübertragung zwischen Bolzen 21 und Exzenterspanner 19 möglich.

An dem in der Figur 2 oberen Ende des Bolzens 21 ist der bereits im Zusammenhang mit der Figur 1 erläuterte Innensechskant 11 vorhanden. In diesem Innensechskant 11 wird bei Bedarf eine Antriebseinrichtung 17 eingesteckt. Die Antriebseinrichtung 17 kann mit einem Hebel oder einem Drehmomentschlüssel 15 zu einem Bedienschlüssel 13 ergänzt werden oder durch einen Schrauber oder einen Industrieroboter angetrieben werden.

Da sich der Exzenterspanner 19 mit der Spindel 7 während der Bearbeitung eines Werkstücks dreht, der Bolzen 21 jedoch in dem Gehäuse 3 aufgenommen ist und sich somit nicht mitdrehen kann, ist eine Druck-Feder 43 vorgesehen, die dafür sorgt, dass der Bolzen 21 sich im Normalfall nicht im Eingriff mit dem Innensechskant 23 des Exzenterspanners 19 befindet. Der "Normalfall" liegt vor, wenn der Exzenterspanner 19 nicht geöffnet oder geschlossen werden soll und keine Antriebseinrichtung 17 und kein Bedienschlüssel 13 in die Betätigungseinrichtung 9 eingesteckt ist. Der "Normalfall" ist in der Figur 2 dargestellt.

Wenn der Exzenterspanner 19 geöffnet oder geschlossen werden soll, dann muss die Antriebseinrichtung 17 in den Innensechskant 11 des Bolzens 21 eingeführt werden. Der Bolzen 21 muss in Richtung des Exzenterspanners 19 gegen die Kraft der Feder 43 bewegt werden und zwar so weit, bis der Außensechskant des Bolzens 21 vollständig in den Innensechskant 23 des Exzenterspanners 19 eingefahren ist. Dann können die zum Spannen bzw. Lösen der Werkzeugaufnahme erforderlichen Drehmomente zuverlässig vom Bedienschlüssel 13 auf den Exzenterspanner 19 übertragen werden.

Im unteren Teil der Figur 2 ist ein Längsschnitt durch einen Werkzeughalter 1 mit stehendem Werkzeug dargestellt. Im Zusammenhang mit der Erfindung besteht der wesentliche Unterschied zu dem im oberen Teil der Figur 2 dargestellten Werkzeughalter darin, dass der Exzenterspanner 19 in dem Gehäuse 3 und nicht in der Spindel 7 aufgenommen und gelagert ist. Das Gehäuse 3 ist hier mit einem Revolver 120 verbunden (z.B. durch nicht dargestellte Schrauben) und kann in anderen (nicht dargestellten) Ausführungsformen auch einteilig sein.

Das Spannen und Lösen des stehenden Werkzeugs erfolgt genauso wie oben im Zusammenhang mit dem angetriebenen Werkzeughalter 1 beschrieben.

Die Erfindung ist nicht auf angetriebene Werkzeughalter 1 dieses Typs beschränkt. Es ist eine Vielzahl anderer angetriebener und stehender Werkzeughalter 1 auf dem Markt, die prinzipiell gleich aufgebaut sind. Auch deren Betätigungseinrichtungen weisen einen drehbar und in Längsrichtung verschiebbaren Bolzen auf, der bei Bedarf mit einem Vorsprung in eine Vertiefung eines Spannelements der Spindel oder einer anderen feststehenden Werkzeugaufnahme eingefahren werden kann und in diesem Zustand das zum Spannen und Lösen erforderliche Drehmoment vom Bedienschlüssel auf das Spannelement überträgt. Beispielhaft seien in diesem Zusammenhang die EP 3 263 252 A2, DE 10 2010 052 884 A1 der Benz GmbH Werkzeugsysteme und die EP 2 529 865 A1 der Su-Matic Corp. genannt.

Wenn beispielsweise ein Maschinenbediener mit dem Bedienschlüssel 13 den Bolzen 21 nicht tief genug in den Innensechskant 23 des Exzenterspanners 19 einführt, bevor der Exzenterspanner 19 geöffnet oder geschlossen wird, kann die zulässige Flächenpressung zwischen dem nur halb eingefahrenen Außensechskant des Bolzens 21 und dem Innensechskant 23 des Exzenterspanners überschritten werden. In Folge dessen nimmt der Werkzeughalter 1 Schaden. Aus der EP 3 263 252 A2 (Alpstool) ist ein Ansatz zur Überwindung der Nachteile des Standes der Technik bekannt bei dem in die Betätigungseinrichtung des Werkzeughalters Verriegelungsmittel integriert werden.

Aus der US 2014/0260826 A1, der US 6 092 441 und der US 5 485 769 sind Adapter bekannt, die eine sogenannte Ratsche und eine Nuß miteinander koppeln.

Der Erfindung liegt die Aufgabe zugrunde, einen Bedienschlüssel bereitzustellen, der das Lösen und Spannen eines Werkzeugs eines Werkzeughalters (verglichen mit einem herkömmlichen Außensechskantschlüssel) einfacher, zuverlässiger und sicherer macht. Fehlbedienungen und die daraus resultierenden Schäden sollen wirkungsvoll verhindert werden. Dies ist vor allem deshalb von Bedeutung, weil in den Arbeitsräumen von Dreh- und Bearbeitungszentren oft nur relativ wenig Platz zur Verfügung steht und die Einsehbarkeit der Betätigungseinrichtung 9 des Werkzeughalters 1 nicht immer optimal ist. Manchmal kann der Maschinenbediener die Betätigungseinrichtung des Werkzeughalters 1 gar nicht sehen.

Diese Aufgabe wird erfindungsgemäß gelöst durch eine Antriebs- und Verriegelungseinrichtung nach Anspruch 1 Diese Antriebs- und Verriegelungseinheiten umfasst einen Zapfen, wobei ein Drehmoment übertragender erster Abschnitt des Zapfens erste Verriegelungsmittel aufweist und ein zweiter Abschnitt des Zapfens zweite Verriegelungsmittel aufweist.

Erste und zweite Verriegelungsmittel werden nacheinander aktiviert, wenn die erfindungsgemäße Antriebs- und Verriegelungseinrichtung in die Betätigungseinrichtung des Werkzeughalters eingeführt wird.

Auf diese Weise ist es möglich, die Antriebs- und Verriegelungseinheit nicht nur im Bereich des Drehmomentübertragenden Abschnitts des Zapfens mit dem Gegenstück (d. h. einem Bolzen) eines Werkzeughalters formschlüssig oder kraftschlüssig zu verriegeln, sondern es ist auch möglich mit Hilfe des zweiten Verriegelungsmittels, den Bedienschlüssel mit dem Gehäuse eines Werkzeughalters oder eines damit verbundenen Revolvers zu verriegeln und an diesem temporär zu befestigen. Bei manchen Ausführungsformen der Erfindung kann der Maschinenbediener im verriegelten Zustand den Bedienschlüssel loslassen, ohne dass dieser aus dem Werkzeughalter herausfällt. Dies ist dann besonders vorteilhaft, wenn das im Werkzeughalter gespannte Werkzeug herausgenommen oder ein anderes Werkzeug eingesetzt werden soll. Dann kann der Maschinenbediener beide Hände gut gebrauchen. Sobald das Werkzeug im Werkzeughalter eingesetzt wurde, betätigt der Maschinenbediener den erfindungsgemäßen Bedienschlüssel und spannt das zuvor eingesetzte Werkzeug im Werkzeughalter. Dieser Vorteil kommt auch dann zum Tragen, wenn die Antriebseinrichtung automatisiert (z. B. mittels eines Industrieroboters oder einer anderen Handhabungseinrichtung) und nicht manuell betätigt wird und/oder der Werkzeugwechsel über einen Industrieroboter oder eine andere Handhabungseinrichtung erfolgt.

Die erfindungsgemäße Antriebseinrichtung führt zu einer sichereren und weniger fehleranfälligen Bedienung der Betätigungseinrichtung des Werkzeughalters, weil durch das Verriegeln der Antriebseinrichtung mit dem Gehäuse des Werkzeughalters oder Revolvers gewährleistet ist, dass die Antriebseinrichtung ordnungsgemäß in den Werkzeughalter eingeführt wurde und infolgedessen auch der Bolzen des Werkzeughalters vollständig in den Exzenterspanner des Werkzeughalters eingreift.

Weil erste und zweite Verriegelungsmittel jeweils eine taktile Rückmeldung geben, wenn sie nacheinander einrasten, erhält der Maschinenbediener nacheinander zwei Rückmeldungen, wenn er die erfindungsgemäße Antriebs- und Verriegelungseinrichtung in die Betätigungseinrichtung des Werkzeughalters einführt. Dadurch werden Fehlbedienungen und daraus resultierende Folgeschäden (Schäden an dem Werkzeughalter, an dem Werkzeug, wenn dieses nicht korrekt gespannt werden, und/oder an dem Werkstück) sicher vermieden.

Der Maschinenbediener erhält durch das zweifache Einrasten bzw. Verriegeln taktile und visuelle Rückmeldungen, sobald der Bedienschlüssel und mit ihm der Bolzen der Betätigungseinrichtung vollständig in den Exzenterspanner der Spindel eingefahren ist. Im Falle einer Automatisierung kann man die zwei Rastfunktionen durch Sensoren überwachen. Will man den Bedienschlüssel aus dem Werkzeughalter entfernen wird außerdem sichergestellt, dass der Bolzen des Werkzeughalters über das Verriegelungselement der erfindungsgemäßen Antriebseinrichtung aus dem Exzenterspanner gezogen wird, bevor sich die erste Verriegelung löst. Beim Stand der technik sorgt nur die Feder 43 dafür, dass der Bolzen 21 aus dem Exzenterspanner 19 gezigen wird. Es wird somit verhindert, dass der Bolzen im Exzenterspanner hängen bleibt. Dadurch sind Überlastungen oder Fehlbedienungen des Werkzeughalters bzw. des Bedienschlüssels ausgeschlossen. Beschädigungen des Werkzeughalters durch eine fehlerhafte Handhabung des Bedienschlüssels oder ein ungewolltes

Hängenbleiben des Bolzens im Exzenterspanner sind ebenfalls ausgeschlossen, so dass die Lebensdauer des Werkzeughalters erhöht wird. Wegen der vereinfachten Bedienung können auch weniger qualifizierte Maschinenbediener fehlerfrei arbeiten und das System kann leichter automatisiert werden.

Durch geeignete Gestaltung der ersten Verriegelungsmittel kann, wie beispielhaft in allen Ausführungsbeispielen dargestellt, eine 100%ige Kompatibilität des Innensechskants 11 vom Bolzen 21 zu Standard-Bedienwerkzeugen (z.B. Sechskantschlüssel) erreicht werden. Dies ermöglicht den Maschinenbedienern jederzeit anstelle der erfindungsgemäßen Antriebseinrichtung auch herkömmliche Bedienwerkzeuge einzusetzen und es verhindert, dass durch falsch gewählte Bedienwerkzeuge eine Beschädigung des Bolzens 21 der Betätigungseinrichtung 9 am Werkzeughalter auftritt.

In einer vorteilhaften Ausgestaltung der Erfindung sind die ersten Verriegelungsmittel und/oder die zweiten Verriegelungsmittel als Federringe oder federbelastete Maschinenelemente (z.B. Kugeln, Stifte) ausgebildet. Die ersten Verriegelungsmittel der Antriebseinrichtung und der Bolzen des Werkzeughalters bilden eine lösbare Schnappverbindung, wobei Biegeschnapparmverbindungen oder Ringschnappverbindungen besonders vorteilhaft sind. Diese Ausführungsformen sind fertigungstechnisch sehr gut zu beherrschen und kostengünstig. Trotzdem bieten sie die oben genannten Vorteile.

In einer weiteren vorteilhaften Ausgestaltung der Erfindung ist der Zapfen in einem Gehäuse axial verschiebbar geführt, wobei die ersten Verriegelungsmittel in einer ersten Radialbohrung und einer zweiten Radialbohrung angeordnet sind und durch übertragende Maschinenelemente in zumindest einer verbindenden Bohrung zusammenwirken. Die übertragenden Maschinenelemente können z.B. Kugeln, Stifte aber auch ein Fluid (z.B. Fett) sein, die mit den Verriegelungsmitteln zusammenwirken und die Positionen der ersten Verriegelungsmittel (z.B. Kugeln) in beiden Radialbohrungen koppeln. Die Positionen der Verriegelungsmittel in den Radialbohrungen sind durch das oder die übertragenden Maschinenelemente derart miteinander gekoppelt, dass entweder mindestens ein Verriegelungsmittel in der ersten Radialbohrung oder mindestens ein Verriegelungsmittel in der zweiten Radialbohrung in radialer Richtung etwas über den Zapfen hinausragt. In einer Führungsbohrung des Gehäuses ist ein Einstich vorhanden, der in einer Offenstellung der ersten Verriegelungsmittel mindestens ein Verriegelungsmittel der zweiten Radialbohrung aufnimmt.

Wenn nun der Zapfen relativ zu dem Gehäuse verschoben wird, dann entfernt sich der Einstich von der zweiten Radialbohrung und die Verriegelungsmittel werden von der Führungsbohrung des Gehäuses in die zweite Radialbohrung gedrängt. Über die übertragenden Maschinenelemente in der die Radialbohrungen verbindenden Bohrung wird infolgedessen mindestens ein, in der Regel jedoch zwei Verriegelungsmittel aus der ersten Radialbohrung radial nach außen gedrückt. Diese Verriegelungsmittel tauchen in die Vertiefungen in dem Bolzen der Betätigungseinrichtung des Werkzeughalters ein und verriegeln somit den drehmomentübertragenden ersten Abschnitt des Zapfens mit dem Bolzen der Betätigungseinrichtung des Werkzeughalters. Auf diese Weise ist eine formschlüssige Verriegelung zwischen Zapfen und Bolzen gewährleistet.

Dieses Prinzip kann auch bei der zweiten Verrieglungseinrichtung (zwischen dem Zapfen und dem Gehäuse des Werkzeughalters) angewandt werden.

Die zweite Verriegelungseinrichtung kann auch mit Hilfe von Spreizbacken realisiert werden. Eine solche Ausführungsform ist besonders kompakt und sehr robust.

In weiterer vorteilhafter Ausgestaltung der Erfindung ist der Zapfen zweiteilig ausgebildet. Die Antriebsseite des Zapfens, das heißt dort, wo beispielsweise ein Drehmomentschlüssel, ein Schrauber oder eine andere Drehmoment abgebende Vorrichtung eingesteckt werden kann, ist an einem zweiten Teil des Zapfens ausgebildet und die Abtriebsseite ist an einem ersten Teil des Zapfens ausgebildet. Der erste Teil und der zweite Teil des Zapfens sind koaxial zueinander in dem Gehäuse angeordnet sowie drehbar gelagert und axial verschiebbar geführt. Zwischen dem ersten Teil und dem zweiten Teil des Zapfens ist eine schaltbare Kupplung vorgesehen. Diese Kupplung wird eingerückt, wenn sich der Zapfen relativ zu dem Gehäuse weit genug in axialer Richtung bewegt hat. Dadurch ist sichergestellt, dass erst wenn der drehmomentübertragende Abschnitt des Zapfens weit genug in eine komplementäre Ausnehmung des Bolzens eingefahren ist, Drehmomente vom Bedienschlüssel in die Betätigungseinrichtung des Werkzeughalters 1 eingeleitet werden können. Dadurch ist auch gewährleistet, dass der Bolzen mit seinem Außensechskant oder Außensechsrund ausreichend tief in den komplementären Innensechskant bzw. Innensechsrund des Exzenterspanners eingefahren ist. Die zum Spannen bzw. Lösen des Exzenterspanners erforderlichen Drehmomente können hierdurch sicher und ohne Beschädigungen einzelner Bauteile übertragen werden.

Eine konstruktiv besonders vorteilhafte Ausführung einer schaltbaren Kupplung zwischen den beiden Teilen des Zapfens sieht vor, dass die schaltbare Kupplung mindestens eine Vertiefung in dem ersten Teil und mindestens eine Querbohrung in dem zweiten Teil des Zapfens umfasst, dass die Vertiefung(en) in einer Verlängerung der oder den Querbohrungen angeordnet ist/sind, dass in der Querbohrung jeweils eine Kugel vorgesehen ist und dass in dem Gehäuse ein im Durchmesser erweiterter Bereich vorgesehen ist. Hierdurch kann die Kugel nach außen ausweichen, sodass sie nicht in den Innendurchmesser des zweiten Teiles übersteht. Durch eine Anlaufschräge am Ende des im Durchmesser erweiterten Bereichs werden die Sperrkugeln in die Vertiefungen des ersten Teiles gedrückt, sobald der Zapfen weit genug in die Betätigungseinrichtung des Werkzeughalters 1 eingetaucht ist. Wenn die Sperrkugeln in die Vertiefungen eingetaucht sind, ist die Kupplung geschlossen. Bei diesem Ausführungsbeispiel umgibt ein Abschnitt des zweiten Teils des Zapfens den ersten Teil des Zapfens, so dass die Vertiefung(en) in dem ersten Teil und die Querbohrung(en) fluchtend zueinander angeordnet werden können.

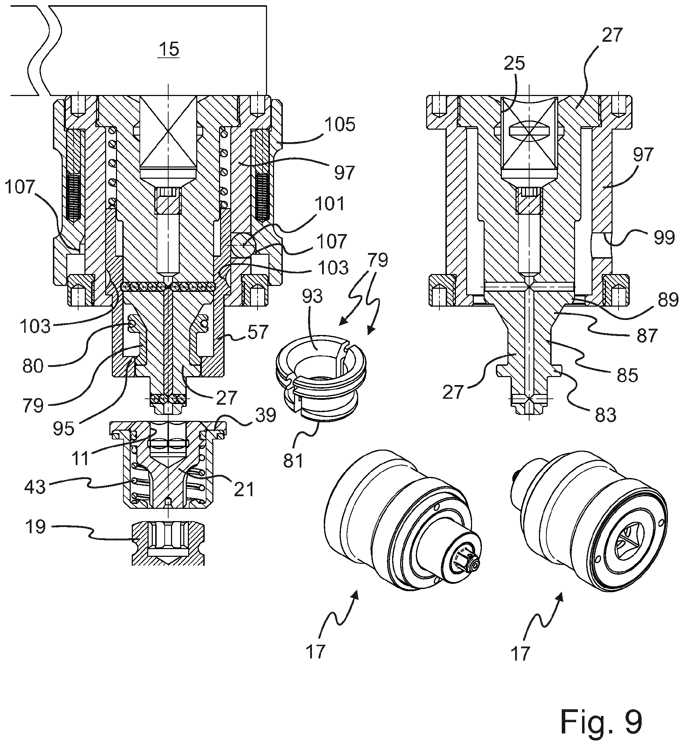

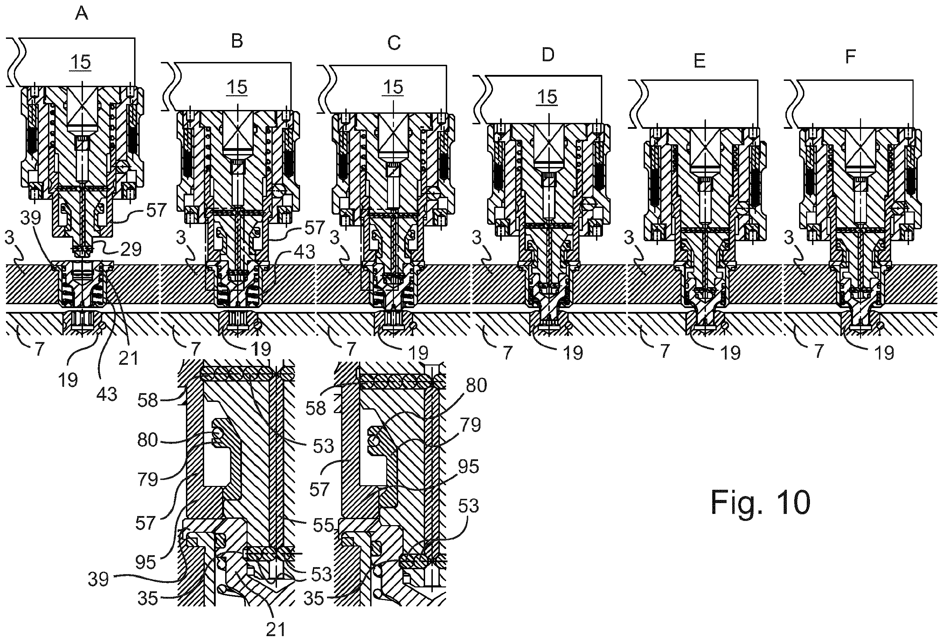

Eine weitere vorteilhafte Ausgestaltung der Erfindung sieht vor, dass die Antriebseinrichtung ein Sperrspannwerk aufweist. Sperrspannwerke gibt es in verschiedensten Ausführungsformen. Die wohl bekannteste Anwendung eines Sperrspannwerks ist ein Kugelschreiber. Dort wird das Sperrspannwerk dazu benutzt, um die Mine entweder im Gehäuse des Kugelschreibers verschwinden zu lassen oder, wenn der Kugelschreiber benutzt werden soll, die Mine relativ zu dem Gehäuse so zu arretieren, dass die Spitze der Mine aus dem Gehäuse ragt. Eine besonders vorteilhafte Form eines Sperrspannwerks ist in den Figuren 9 und 10 dargestellt.

Die eingangs genannte Aufgabe wird auch durch ein Verfahren mit den Merkmalen des Anspruch 18 gelöst. Es ist bei einem voll automatisierten Werkzeugwechsel sehr vorteilhaft, weil das Lösen des Werkzeugs, der Wechsel des Werkzeugs und das anschließende Spannen des Werkzeugs von einem Industrieroboter nacheinander durchgeführt werden kann.

Weitere Vorteile und vorteilhafte Ausgestaltungen der Erfindung sind der nachfolgenden Zeichnung, deren Beschreibung und den abhängigen Ansprüchen entnehmbar. Zeichnung

Es zeigen:
- Figur 1: einen angetriebenen Werkzeughalter mit einem Ausführungsbeispiel eines erfindungsgemäßen Bedienschlüssels,
- Figur 2: oben einen Längsschnitt durch den angetriebenen Werkzeughalter gemäß Figur 1, und unten einen Längsschnitt durch einen stehenden Werkzeughalter eingebaut in einen Revolver,
- Figuren 3 und 4: verschiedenen Darstellungen eines ersten Ausführungsbeispiels einer erfindungsgemäßen Antriebseinrichtung, (Solution A)
- Figuren 5 und 6: verschiedene Darstellungen eines zweiten Ausführungsbeispiels (Solution B)
- Figuren 7 und 8: verschiedene Darstellungen eines dritten Ausführungsbeispiels sowie die (Solution C)
- Figuren 9 und 10: verschiedene Darstellungen eines vierten Ausführungsbeispiels (Solution D)

### Beschreibung der Ausführungsbeispiele

In den Figuren sind aus Gründen der Übersichtlichkeit nicht alle Bezugszeichen in allen Figuren und Ansichten eingetragen. Für gleiche Bauteile werden durchgehend gleiche Bezugszeichen verwendet.

Um die Funktionsweise der erfindungsgemäßen Antriebseinrichtung 17 zu veranschaulichen, sind in manchen Figuren der Bolzen 21 und ein Teil des Exzenterspanners 19 eingezeichnet. Diese Teile sind nicht Teil des Bedienschlüssels 13 bzw. der erfindungsgemäßen Antriebseinrichtung 17. Durch die Darstellung von Bolzen 21 und Exzenterspanner 19 kann das Zusammenwirken der erfindungsgemäßen Antriebseinrichtung 17 mit der Betätigungseinrichtung 9 eines Werkzeughalters 1 veranschaulicht werden. Daraus wird unter anderem deutlich, dass die Verriegelungsmittel der erfindungsgemäßen Antriebseinrichtung 17 nur dann aktiviert werden, wenn die Antriebseinrichtung 17 weit genug in den Bolzen 21 des Werkzeughalters und dieser wiederum weit genug in den Exzenterspanner 19 eingetaucht ist. Dadurch liefert eine aktivierte Verriegelungseinrichtung die Rückmeldungen an den Maschinenbediener oder einen Industrieroboter, dass die Drehmoment übertragenden Formschlüsse
- zwischen Antriebseinrichtung 17 und Bolzen 21 sowie
- zwischen Bolzen 21 und Exzenterspanner 19
ordnungsgemäß ausgebildet sind. Dann können sie das volle Drehmoment übertragen können, ohne Schaden zu nehmen.

In allen Ausführungsbeispielen ist am unteren Ende des Bolzens 21 ein Außensechskant bzw. ein Außensechsrund angeordnet. Der Exzenterbolzen 19 weist an seiner in den Figuren 2 bis 10 oberen Stirnseite, die dem Bolzen 21 zugewandt ist, eine komplementäre Vertiefung (Innensechskant bzw. Innensechsrund) auf. Dadurch ist es möglich, Drehmomente zwischen dem Bolzen 21 und dem Exzenterspanner 19 zu übertragen, sobald der Bolzen 21 mit seiner Abtriebsseite in den Innensechsrund des Exzenterspanners 19 eingetaucht ist.

Die Darstellung eines Innensechskants 11 in dem Bolzen 21 in Verbindung mit dem erfindungsgemäßen Bedienschlüssel 13 dient lediglich der Veranschaulichung. Die Erfindung ist nicht auf Werkzeughalter 1 mit Innensechskant 11 in dem Bolzen 21 bzw. einen dazu komplementären Außensechskant an dem Bedienschlüssel 13 beschränkt.

In allen dargestellten Ausführungsbeispielen wird die erfindungsgemäße Antriebs- und Verriegelungseinheit 17 von einem Drehmomentschlüssel 15 (= Drehmoment abgebende Vorrichtung) dargestellt. Es ist auch möglich anstelle des Drehmomentschlüssels 15 einen einfachen Hebel oder einen anderweitig angetriebenen, drehmomenterzeugenden Schrauber (mechanisch elektrisch, pneumatisch, hydraulisch etc.) vorzusehen. Die erfindungsgemäße Antriebs- und Verriegelungseinheit 17 und die antriebsseitige Drehmoment abgebende Vorrichtung können auch in einer Baugruppe zusammengefasst sein.

Im oberen Teil der Figur 3 ist ein Bedienschlüssel 13 dargestellt, der, ähnlich wie in der Figur 1, aus zwei Baugruppen besteht. Der obere Teil ist als Drehmomentschlüssel 15 ausgebildet, der in eine erfindungsgemäße Antriebseinrichtung 17 eingesteckt ist. Dies kann über einen Vierkant 25 in an sich bekannter Weise erfolgen. Es versteht sich von selbst, dass der Drehmomentschlüssel 15 und die erfindungsgemäße Antriebseinrichtung 17 auch einstückig ausgebildet werden können. In einer besonders einfachen Ausführungsform ist anstelle des Drehmomentschlüssels 15 ein Hebel vorgesehen, der drehfest mit der Antriebseinrichtung 17 verbunden ist.

Das in der Figur 3 dargestellte erste Ausführungsbeispiel einer erfindungsgemäßen Antriebseinrichtung 17 besteht aus einem Zapfen 27 mit einem ersten Abschnitt 29 und einem zweiten Abschnitt 31. Der Bereich des ersten drehmomentübertragenden Abschnitts 29 ist bei diesem Ausführungsbeispiel als Außensechskant oder Außensechsrund ausgebildet, der mit dem Innensechskant 11 oder einem Innensechsrund des Bolzens 21 des Werkzeughalters 1 kompatibel ist. Der Bereich des zweiten Abschnitts 31 kann als Zylinder ausgebildet sein.

In den Isometrien der Figur 3 ist gut zu erkennen, dass der erste Abschnitt 29 als Außensechskant ausgebildet ist und dass an dem gegenüberliegenden Ende des Zapfens 27 ein Innenvierkant 25 ausgebildet ist. In diesen Innenvierkant 25 wird der Drehmomentschlüssel 15, ein einfacher Hebel oder eine andere Drehmoment abgebende Einrichtung eingesteckt.

Im Bereich des ersten Abschnitts 29 sind erste Verriegelungsmittel, nämlich ein erster Federring 33, vorgesehen. Der Federring 33 ist in einer Nut so aufgenommen, dass er in entspanntem Zustand über die Flächen des Außensechskants des ersten Abschnitts 29 hinausragt. Die Nut ist weiter so bemessen, dass der Federring 33 radial nach innen ausweichen kann, wenn der Außensechskant in den Innensechskant 11 des Bolzens 21 eingeführt wird.

An dem Innensechskant 11 des Bolzens 21 sind Vertiefungen 35 ausgebildet. Sie sind so positioniert, dass der Federring 33 in die Aussparungen 35 des Bolzens 21 ausfedert, wenn der erste Abschnitt 29 der Antriebseinrichtung 17 vollständig in den Innensechskant 11 des Bolzens 21 gesteckt wurde.

Dadurch erhält der Maschinenbediener eine erste taktile Rückmeldung und es entsteht eine federnde, aber dennoch feste Verbindung zwischen dem Außensechskant des Zapfens 29 und dem Innensechskant 11 des Bolzens 21. Anders ausgedrückt: Die erfindungsgemäße Antriebseinrichtung 17 rastet federnd in dem Innensechskant 11 des Bolzens 21 ein, sobald der erste Abschnitt 29 des Zapfens 27 voll in den Innensechskant 11 eingetaucht ist. Dadurch ist es möglich, Axialkräfte zwischen der erfindungsgemäßen Antriebseinrichtung 17 und dem Bolzen 21 zu übertragen, wenn die Antriebseinrichtung 17 aus der

Betätigungseinrichtung 9 des Werkzeughalters 1 herausgezogen wird. Dadurch wirken zwei Kräfte, nämlich die der Druck-Feder 43 und die über den Bedienschlüssel 3 aufgebrachte Axialkraft, auf den Bolzen 21, wenn der Bedienschlüssel 13 aus der Betätigungseinrichtung 9 des Werkzeughalters 1 gezogen wird. Diese Kräfte bewirken sehr zuverlässig, dass der Bolzen 21 aus dem Exzenterspanner 19 gezogen wird und die Spindel 7 sich wieder frei drehen kann. Das Risiko eines ungewollten Verbleibs des Bolzens 21 in dem Exzenterspanner 19 wird signifikant reduziert. Bei diesem Ausführungsbeispiel ist der erste Federring 33 die erste Verriegelungseinrichtung.

In dem zweiten Abschnitt 31 des Zapfens 27 ist ein zweiter Federring 37 ausgebildet; er ist bei diesem Ausführungsbeispiel die zweite Verriegelungseinrichtung.

Dieser zweite Federring 37 dient dazu, die Betätigungseinrichtung 9 an einer Führungsplatte 39 des angetriebenen Werkzeughalters 1 zu verrasten. Dadurch erhält der Maschinenbediener eine zweite taktile Rückmeldung. Anstelle der Federringe 33, 37 können auch andere Schnappverbindungen zwischen Antriebseinrichtung 17 und Werkzeughalter 1 zur Anwendung kommen.

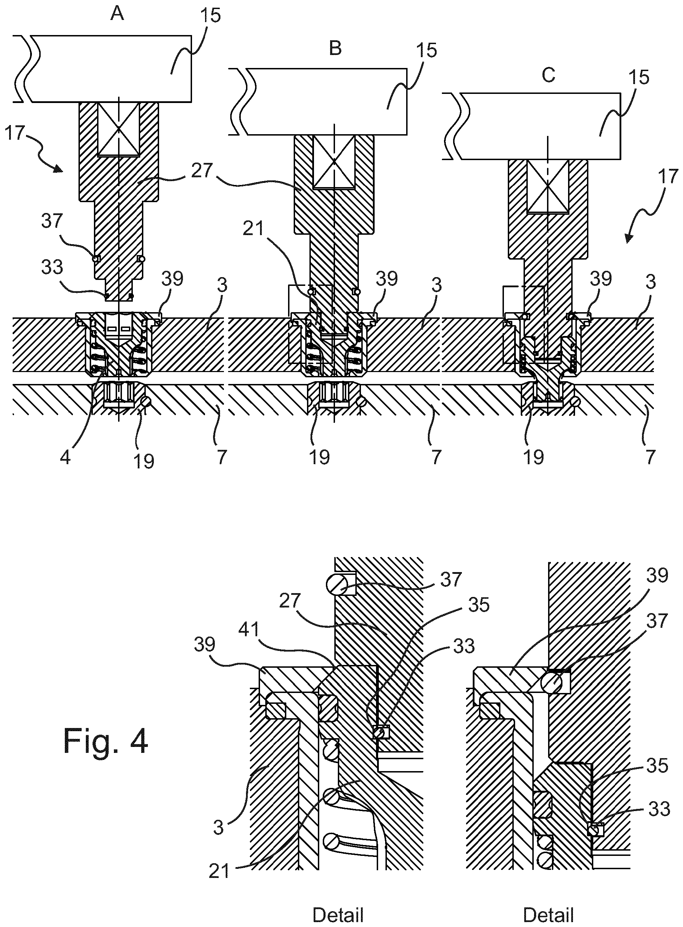

In den vergrößert dargestellten Details der Figur 4 ist die Führungsplatte 39 (der Betätigungseinrichtung 9) im TeilSchnitt und vergrößert dargestellt. Die Führungsplatte 39 hat in der Mitte eine Durchgangsöffnung 41. Der zweite Abschnitt 31 des Zapfens 27 ist so bemessen, dass er durch die Durchgangsöffnung 41 hindurchpasst. Der zweite Federring 37 ist in seiner entspannten Stellung, wie sie in Figur 3 dargestellt ist, etwas größer im Durchmesser als die Durchgangsöffnung 41 in der Führungsplatte 39. Dies bedeutet, dass der zweite Federring 37 beim Einführen der Antriebseinrichtung 17 in die Betätigungseinrichtung 9 des Werkzeughalters 1 kurz zusammengedrückt wird, wenn er die Durchgangsöffnung 41 passiert. Danach federt er wieder auf und verrastet bzw. arretiert auf diese Weise die Antriebseinrichtung 17 mit der Führungsplatte 39 bzw. dem Werkzeughalter 1. Dadurch erhält der Maschinenbediener eine zweite taktile Rückmeldung.

Diese Vorgänge sind in der Figur 4 dargestellt. Dabei sind jeweils die Spindel 7, der obere Teil des Exzenterspanners 19, das Gehäuse 3 und der darin befindliche Bolzen 21 mit der Führungsplatte 39 und der Druckfeder 43 dargestellt. Die Druckfeder 43 drückt den Bolzen 21 von der Spindel 7 weg (in der Figur 4 nach oben). Die Ansicht "A" entspricht weitgehend der in Figur 3 dargestellten Situation. Der erfindungsgemäße Bedienschlüssel befindet sich nicht im Eingriff mit dem Bolzen 21 des angetriebenen Werkzeughalters 1.

In der Ansicht "B" ist die Antriebseinrichtung 17 bereits ein Stück weit in den Bolzen 21 eingetaucht und zwar genau so weit, dass der erste Abschnitt 29 des Zapfens 27 vollständig in den Innensechskant 11 des Bolzens 21 eingefahren ist. In dieser Position befinden sich der erste Federring 33 und die Ausnehmung/Vertiefungen 35 in dem Innensechskant 11 auf gleicher Höhe und der erste Federring 33 taucht in die Vertiefungen 35 ein. Die erste Verriegelungseinrichtung ist aktiv.

In der in "B" dargestellten Position befindet sich der zweite Federring 37 des Zapfens 27 noch oberhalb der Führungsplatte 39.

In der in "C" dargestellten Position ist die erfindungsgemäße Antriebseinrichtung 17 weiter nach unten bewegt worden. Der Bolzen 21 hat sich in Richtung des Exzenterspanners 19 bewegt und der Außensechskant des Bolzens 21 ist in den Innensechskant des Exzenterspanners 19 eingefahren. Dadurch ist eine Drehmomentübertragung zwischen der Antriebseinrichtung 17 bzw. dem Drehmomentschlüssel 15 und dem Exzenterspanner 19 möglich.

In dieser Position befindet sich der zweite Federring 37 unterhalb der Führungsplatte 39 und arretiert dadurch die Antriebseinrichtung 17 in dem Gehäuse 3 des angetriebenen Werkzeughalters 1. Anders ausgedrückt: Die Antriebseinrichtung 17 ist fest mit dem Werkzeughalter 1 verbunden und die zweite Verriegelungseinrichtung ist aktiv. In Folge dessen bleibt der Bedienschlüssel 13 am Werkzeughalter 1, selbst wenn der Maschinenbediener den Bedienschlüssel 13 loslässt.

Erst wenn der Maschinenbediener aktiv an dem Drehmomentschlüssel 15 zieht (nach oben in der Figur 4), lösen sich die Antriebseinrichtung 17 und der Bolzen 21 wieder. Beim Herausziehen der Antriebseinrichtung 17 aus dem Werkzeughalter 1 wird - wie bereits erwähnt - über den ersten Federring 33 und die Vertiefungen 35 in dem Bolzen 21 eine Axialkraft auf den Bolzen 21 ausgeübt, so dass der Bolzen 21 nicht nur federunterstützt, sondern auch durch diese Axialkraft zusätzlich unterstützt, aktiv aus dem Exzenterspanner 19 herausgezogen wird.

Durch die zwei erfindungsgemäßen Verriegelungseinrichtungen (einmal in Form des ersten Federrings 33 in Verbindung mit der Vertiefung 35 im Bolzen 21 und zum anderen durch den zweiten Federring 37 und die Führungsplatte 39 im Werkzeughalter 1) ist sichergestellt, dass der Maschinenbediener eine zweifache taktile und visuelle Kontrolle hat, ob der Bedienschlüssel 13 vollständig in den Werkzeughalter 1 eingefahren ist. Das ist dann gewährleistet, wenn der zweite Federring 37 "hinter" der Führungsplatte 39 verschwunden ist. Dann kann das volle Drehmoment zum Spannen bzw. Lösen des Exzenterspanners 19 aufgebracht werden, ohne Schäden im Inneren des angetriebenen Werkzeughalters 1 zu verursachen.

Außerdem ist durch die (zweite) Verriegelung zwischen zweitem Federring 37 und Führungsplatte 39 der Bedienschlüssel 13 gegen unbeabsichtigtes Herausfallen gesichert. Dies ist in der Praxis ein erheblicher Vorteil. Der Bediener kann, wenn er den Exzenterspanner 19 gelöst hat, den Bedienschlüssel 13 loslassen, um mit beiden Händen das Werkzeug aus der Spindel zu entnehmen und durch ein anderes Werkzeug zu ersetzen. Anschließend greift der Bediener wieder zu dem erfindungsgemäßen Bedienschlüssel 13, spannt den Exzenterspanner und damit auch das in die Spindel eingesetzte Werkzeug.

Auch bei einem voll automatisierten Werkzeugwechsel ist das sehr vorteilhaft, weil das Lösen des Werkzeugs, der Wechsel des Werkzeugs und das anschließende Spannen des Werkzeugs von einem Industrieroboter nacheinander durchgeführt werden kann.

Wenn dieser Vorgang abgeschlossen ist und der Exzenterspanner 19 mit dem vorgeschriebenen Drehmoment beaufschlagt wurde, zieht der Bediener den Bedienschlüssel 13 aus dem Bolzen 21 heraus. Dadurch wird auch der Bolzen 21 aktiv aus dem Exzenterspanner 19 herausgezogen. Wenn der Bedienschlüssel 13 vollständig aus dem Bolzen 21 herausgezogen wurde, ist gleichzeitig auch sichergestellt, dass der Bolzen 21 nicht mehr formschlüssig mit dem Exzenterspanner 19 verbunden ist, so dass die Bearbeitung eines Werkstücks mit Hilfe des angetriebenen oder feststehenden Werkzeughalters 1 fortgesetzt werden kann. Es ist auch eine automatische Fehlererkennung möglich, so dass (Folge-)Schäden aufgrund eines fehlerhaft durchgeführten Werkzeugwechsels nahezu ausgeschlossen sind.

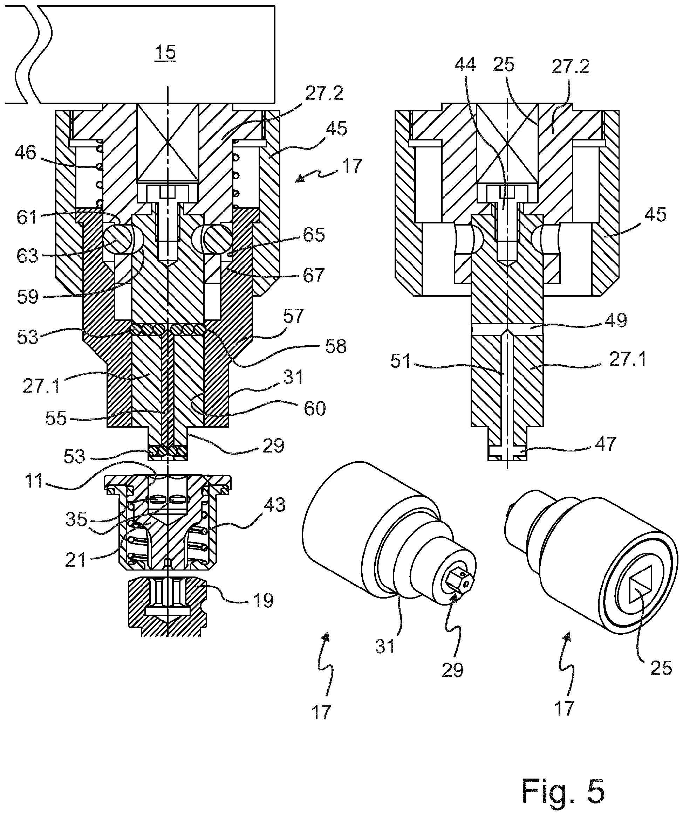

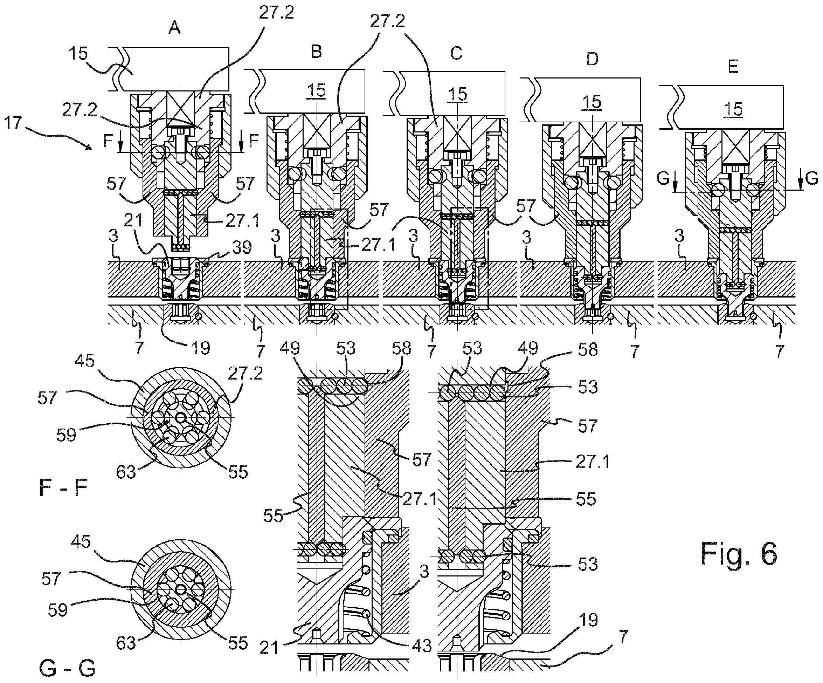

In den Figuren 5 und 6 ist ein zweites Ausführungsbeispiel einer erfindungsgemäßen Antriebs- und Verriegelungseinrichtung 17 in verschiedenen Ansichten dargestellt. Rechts unten in der Figur 5 sind isometrische Ansichten dieses Ausführungsbeispiels dargestellt. Die Außenkontur dieses zweiten Ausführungsbeispiels kann man als gestuften Zylinder beschreiben. An dem einen Ende des gestuften Zylinders ist ein Außensechskant vorgesehen, während an dem gegenüberliegenden Ende ein Vierkant 25 vorgesehen ist. Insoweit entsprechen sich das erste und das zweite Ausführungsbeispiel.

Im rechten oberen Teil der Figur 5 ist ein Längsschnitt durch das zweite Ausführungsbeispiel gezeichnet, wobei lediglich die wichtigsten Bauteile dargestellt sind. Bei diesem Ausführungsbeispiel ist der Zapfen 27 in zwei Teile, 27.1 und 27.2 aufgeteilt. Der erste Teil 27.1 und der zweite Teil 27.2 sind koaxial zueinander angeordnet. Sie sind durch eine zentrale Schraube 44 so miteinander verbunden, dass einerseits eine Drehbewegung der Teile 27.1 und 27.2 relativ zueinander möglich ist. Andererseits sind die beiden Teile in axialer Richtung miteinander gekoppelt.

Mit dem zweiten Teil 27.2 ist eine Hülse 45 verschraubt. Die Hülse 45 wird in der Regel als separates Bauteil hergestellt, um die Montierbarkeit der Antriebseinrichtung 17 zu gewährleisten bzw. zu vereinfachen. Für die Funktion ist es ohne Bedeutung, ob der Teil 27.2 und die Hülse 45 einstückig oder mehrteilig ausgeführt sind.

Im linken Teil der Figur 5 ist ein Gehäuse 57 dargestellt. Der Zapfen 27 mit dem ersten Teil 27.1 und dem zweiten Teil 27.2 wird in einer gestuften Längsbohrung des Gehäuses 57 geführt. Die Hülse 45 umgreift das Gehäuse 57 an ihrem in Fig. 5 unteren Ende. Zwischen Hülse 45 und Gehäuse 57 ist eine optionale Druckfeder 46 vorgesehen. Das Gehäuse 57 ist auch Teil einer schaltbaren Kupplung.

In dem ersten Teil 27.1 des Zapfens 27 sind eine erste Radialbohrung 47 und versetzt dazu eine zweite Radialbohrung 49 vorgesehen. Die beiden Radialbohrungen 47 und 49 werden durch eine Axialbohrung 51 miteinander verbunden.

Die erste Radialbohrung 47 befindet sich im Bereich des ersten Abschnitts 29 des Zapfens 27, während sich die zweite Radialbohrung 49 im Bereich des zweiten Abschnitts 31 befindet.

Wie sich aus dem linken Teil der Figur 5 ergibt sind in den Radialbohrungen 47 und 49 erste Kugeln 53 vorgesehen. In der Axialbohrung 51 wird ein Stift 55 geführt.

Die Länge der Radialbohrungen 47 und 49 sowie die Durchmesser der ersten Kugeln 53 sind so aufeinander abgestimmt, dass entweder im Bereich der ersten Radialbohrung 47 oder im Bereich der zweiten Radialbohrung 49 die äußeren Kugeln 53 etwas über den Durchmesser des Zapfens 27 hinausragen.

In der Figur 5 ist die Situation so dargestellt, dass die Kugeln 53 in der ersten Radialbohrung 47 bündig mit der Schlüsselweite des ersten Abschnitts 29 abschließen, während die Kugeln 53 in der zweiten Radialbohrung 49 in radialer Richtung etwas über den zweiten Abschnitt 31 des Zapfens 27 hinausragen. Auf dieser Höhe ist ein Einstich 58 im Gehäuse 57 der Antriebseinrichtung 17 vorgesehen, so dass die Kugeln 53 im Bereich der zweiten Radialbohrung 49 in radialer Richtung etwas über den zweiten Abschnitt 31 des Zapfens 27 hinausragen können. Der Einstich 58 ist in dem vergrößert dargestellten Detail in Figur 6 gut zu erkennen.

Wenn der Zapfen 27 relativ zu dem Gehäuse 57 (nach unten in Figur 5) verschoben wird, dann wandert der Einstich 58 im Gehäuse 57 relativ zu der zweiten Radialbohrung 49 nach oben. Infolgedessen werden die "überstehenden" Kugeln 53 von der Innenwand des Gehäuses 57 in die zweite Radialbohrung 49 gedrückt. Diese Kugeln 53 drücken den Stift 59 in Richtung der ersten Radialbohrung 47, der wiederum die Kugeln 53 in der ersten Radialbohrung 47 auseinandertreibt, so dass diese Kugeln 53 radial über den ersten Abschnitt 29 des Zapfens 27 hinausragen.

Dieser Fall tritt dann ein, wenn der erste Abschnitt 29 mit seinem Außensechskant in den Innensechskant 11 des Bolzens 21 eingefahren ist und sich die erste Radialbohrung 49 auf Höhe der Vertiefung 35 im Innensechskant 11 des Bolzens 21 befindet. Sobald die Kugeln 53 über das Ende der ersten Radialbohrung 47 hinausragen, entsteht eine formschlüssige Verriegelung zwischen dem Außensechskant im Bereich des ersten Abschnitts 29 des Zapfens 27 und dem Innensechskant 11 des Bolzens 21. Anders ausgedrückt: In dieser Position von Gehäuse 57 relativ zu dem Zapfen 27 ist es nicht möglich, den Zapfen 27 aus dem Bolzen 21 herauszuziehen.

Nachfolgend wird ein Ausführungsbeispiel einer schaltbaren Kupplung in der Antriebseinrichtung 17 beschrieben. Der erste Teil 27.1 des Zapfens und der zweiteTeil 27.2 des Zapfens sind in der in Figur 5 dargestellten Position nicht drehfest miteinander verbunden. D. h. es ist möglich, mit dem Drehmomentschlüssel 15 den zweiten Teil 27.2 des Zapfens zu drehen, während gleichzeitig der erste Teil 27.1 des Zapfens stillsteht.

Erfindungsgemäß ist eine schaltbare Kupplung zwischen dem ersten Teil 27.1 und dem zweiten Teil 27.2 vorgesehen, die dann einrückt, wenn der Zapfen 27 ausreichend tief in den Innensechskant 11 des Bolzens 21 und dieser wiederum ausreichend tief in den Innensechskant des Exzenterspanners 19 eingefahren ist.

Die Funktion einer schaltbaren Kupplung zwischen erstem Teil 27.1 und zweiten Teil 27.2 des Zapfens 27 ist beispielhaft in dem zweiten Ausführungsbeispiel mit Hilfe einer oder mehrerer über den Umfang verteilte (bevorzugt kalottenförmige) Vertiefungen 59 in dem ersten Teil 27.1 des Zapfens 27 und Querbohrungen 61 im zweiten Teil 27.2 des Zapfens 27 realisiert. Auch andere schaltbare Kupplungen (z. B. Klauenkupplung, Zahnkupplung) können in die Antriebseinrichtung 17 integriert werden.

Die Führungsbohrung 60 weist einen im Durchmesser erweiterten Bereich 65 auf. In dem Gehäuse 57 können die Kugeln 63 im Bereich 65 aufgrund des größeren Außendurchmessers nach außen ausweichen. Der Außendurchmesser des Bereiches 65 verjüngt sich am Ende über die Anlaufschräge 67 bis auf den Durchmesser der Führungsbohrung 60. Diese Anlaufschräge 67 und die Führungsbohrung 60 sorgen dafür, dass die Kugeln 63 in die Vertiefungen 59 gedrückt werden, sobald sich der Zapfen 27 relativ zu dem Gehäuse 57 weit genug (nach unten in Figur 5) bewegt hat.

Für die Kugeln 63 bildet der zweite Teil des Zapfens 27.2 eine Art Käfig, gebildet durch die Querbohrung(en) 61. Hierdurch können die Kugeln 63 sich im Wesentlichen nur radial entsprechend dem Verlauf der Querbohrung 61 relativ zum Zapfen 27.2 bewegen.

Die Querbohrungen 61, die Vertiefungen 59, die Kugeln 63, der Bereich 65 und die daran anschließende Anlaufschräge 67 bilden zusammen eine schaltbare Kupplung. In der Figur 5 ist die Kupplung offen; das heißt die Kugeln 63 in den Querbohrungen 61 ragen nicht nach innen über die Querbohrung 61 hinaus und greifen somit nicht in die Vertiefungen 59 ein.

In der Figur 6 ist dieses zweite Ausführungsbeispiel einer erfindungsgemäßen Antriebseinrichtung 17 in verschiedenen Positionen dargestellt. Auch hier werden aus Gründen der Übersichtlichkeit nicht alle Bauteile mit Bezugszeichen versehen.

In der mit "A" bezeichneten Position befindet sich die Betätigungseinrichtung 9 noch oberhalb des Bolzens 21. Der Bolzen 21 befindet sich nicht im Eingriff mit dem Exzenterspanner 19.

Unterhalb der Ansicht "A" ist ein Schnitt entlang der Linie F-F durch die Kupplung dargestellt. Weil die Querbohrungen 61 relativ kurz sind, wurden sie in dem Schnitt F-F nicht mit Bezugszeichen versehen.

In der Ansicht "B" ist der erste Abschnitt 29 der Betätigungseinrichtung 9 in den Innensechskant des Bolzens 21 eingefahren. Das Gehäuse 57 stößt jetzt an die Führungsplatte 39. Eine Relativbewegung zwischen dem Zapfen 27 und dem Gehäuse 57 der Betätigungseinrichtung 9 hat noch nicht stattgefunden. Infolgedessen befinden sich die Kugeln 53 in der oberen Radialbohrung 49 noch teilweise in dem Einstich 58 des Gehäuses 57. Der Einstich 58 ist in dem vergrößert dargestellten Detail unter den Ansichten B und C der Figur 6 gut zu erkennen. Die Kugeln 53 in der ersten Radialbohrung 47 befinden sich innerhalb des Abschnitts 29 des Zapfens 27 und ragen nicht über diesen hinaus. Eine Verriegelung des Abschnitts 29 bzw. der Antriebseinrichtung 17 mit dem Bolzen 21 hat noch nicht stattgefunden.

In der Ansicht "C" wird durch Druck auf den Drehmomentschlüssel 15 der Zapfen 27 in das Gehäuse 57 geschoben, da sich das Gehäuse 57 an der ortfesten Führungsplatte 39 abstützt.

Wenn man nun die Ansicht "C" betrachtet, und insbesondere das vergrößert herausgezeichnete Detail, wird deutlich, dass sich der Zapfen 27 relativ zu dem Gehäuse 57 nach unten bewegt hat, so dass die Kugeln 53 in der zweiten Radialbohrung 49 den Einstich 58 "verlassen" mussten und in die zweite Radialbohrung 49 gedrückt wurden. Infolgedessen hat sich der Stift 55 in der Figur 6 nach unten bewegt und die Kugeln 53 in der ersten Radialbohrung 47 nach außen gedrängt, so dass sich die äußersten Kugeln 53 in die Vertiefungen 35 des Bolzens 21 bewegt haben. Damit sind der Zapfen 27 und der Bolzen 21 formschlüssig miteinander verriegelt. Die durch das Einfahren des Zapfens 27 in den Bolzen 21 und dessen Einfahren in den Exzenterspanner 19 ausgelösten Relativbewegungen zwischen Zapfen 27 und Gehäuse 57 lassen sich gut erkennen, wenn man den Abstand zwischen der Hülse 45 und dem Gehäuse 57 in den Darstellungen "C" bis "E" vergleicht.

In der Ansicht "C" ist der Bolzen 21 noch nicht in den Exzenterspanner 19 eingetaucht. Diese Situation ist in der Ansicht "D" der Figur 6 dargestellt. In der Ansicht "D" ist die Kupplung zwischen den Teilen 27.1 und 27.2 des Zapfens 27 noch nicht geschlossen. Dies ergibt sich daraus, dass die Kugeln 63 ersten Kontakt mit der Anlaufschräge 67 haben, sich aber noch nicht in den Vertiefungen 59 befinden.

Wenn der Zapfen 27 weiter relativ zu dem Gehäuse 57 (nach unten in der Figur 6) verschoben wird, dann drückt die Anlaufschräge 67 am Ende des Bereichs 65 die Kugeln 63 in die Vertiefungen 59 in dem ersten Teil 27.1 des Zapfens 27 und sorgen so für eine drehfeste Verbindung (Kopplung) zwischen dem ersten Teil 27.1 des Zapfens und dem zweiten Teil 27.2 des Zapfens.

Diese drehfeste Verbindung wird erst dann aktiv, wenn nicht nur der drehmomentübertagende Abschnitt 29 des Zapfens 27 vollständig in den Innensechskant des Bolzens 21 eingetaucht ist, sondern wenn der Bolzen 21 mit seinem Außensechskant oder Außensechsrund vollständig in den Innensechskant bzw. den Innensechsrund des Exzenterspanners 19 eingetaucht ist. Die erfindungsgemäße Kupplung gewährleistet, dass Drehmomente von dem Drehmomentschlüssel 15 erst dann über die erfindungsgemäße Antriebseinrichtung 17 und den Bolzen 21 in den Exzenterspanner übertragen werden können, wenn alle formschlüssigen Elemente voll im Eingriff sind und somit die zur Drehmomentübertragung vorgesehenen Kontaktflächen (Außensechskant/Innensechskant zwischen Bolzen 21 und Exzenterspanner 19 sowie zwischen dem Zapfen 29 und dem Bolzen 21) auch tatsächlich zur Verfügung stehen. Eine Überlastung dieser Kontaktflächen und daraus resultierende Schäden an dem Werkzeughalter sind somit ausgeschlossen.

Wenn nach dem Spannen eines Werkzeugs die erfindungsgemäße Antriebseinrichtung 17 (nach oben in der Figur 6) aus dem Werkzeughalter 1 herausgezogen wird, dann wird (wegen der Verriegelung mit den Zapfen 29) auch der Bolzen 21 aktiv aus dem Exzenterspanner 19 herausgezogen.

Wenn ein einfacher Außensechskantschlüssel zum Spannen oder Lösen des Exzenterspanners 19 verwendet wird, dann besteht immer die Gefahr, dass der Bediener den Schlüssel nicht weit genug nach unten drückt, so dass erstens die Kontaktfläche zwischen dem Zapfen 29 und dem Innensechskant des Bolzens 21 nicht voll zur Verfügung steht und, was noch schlimmer ist, die Kontaktfläche zwischen dem Außensechskant des Bolzens 21 und dem Innensechskant des Exzenterspanners 19 nicht groß genug ist.

Wenn in einer solchen "Zwischenstellung" das zum Spannen eines Werkzeugs erforderliche Drehmoment übertragen wird, kann es zu massiven Schäden kommen, indem sich der Innensechsrund bzw. Innensechskant im Exzenterspanner 9 verformt und/oder der Bolzen 21 Schaden nimmt. Beides führt zum Ausfall des Werkzeughalters und erfordert eine kostenintensive Reparatur desselben. Mit Hilfe der erfindungsgemäßen Antriebseinrichtung 17 bzw. des erfindungsgemäßen Bedienschlüssel 13 ist dies mehr möglich, weil erstens eine Verriegelung zwischen dem Zapfen 29 und dem Bolzen 21 stattfindet und zweitens eine Drehmomentübertragung zwischen dem Drehmomentschlüssel 15 und dem Exzenterspanner 19 erst dann möglich ist, wenn der Formschluss zwischen dem drehmomentübertragenden Abschnitt 29 des Zapfens 27, dem Bolzen 21 und dem Exzenterspanner 19 voll ausgebildet ist.

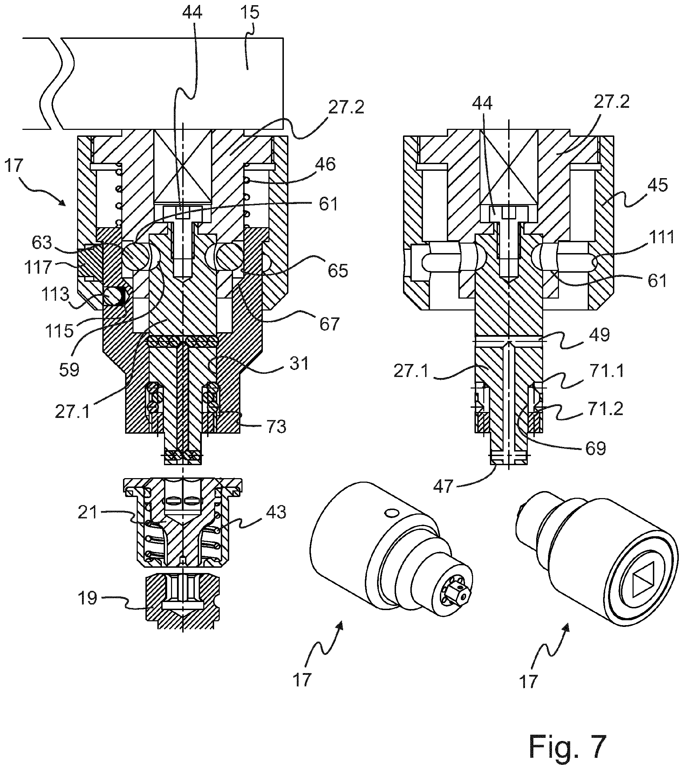

In der Figur 7 ist ein weiteres Ausführungsbeispiel einer erfindungsgemäßen Antriebs- und Verriegelungseinrichtung 17 dargestellt.

Dieses Ausführungsbeispiel stellt eine mit einer zusätzlichen Funktionalität versehene Version des zweiten Ausführungsbeispiels dar. Die erste Verriegelungseinrichtung zwischen dem Zapfen 29 und dem Bolzen 21 sowie die formschlüssige Kupplung zwischen dem ersten Teil 27.1 des Zapfens und dem zweiten Teil 27.2 des Zapfens ist bei beiden Ausführungsformen gleich.

Der Unterschied gegenüber dem zweiten Ausführungsbeispiel ist eine zweite Verriegelungseinrichtung, welche dazu führt, dass die Antriebseinrichtung 17 am Gehäuse 3 des angetriebenen Werkzeughalters 1 formschlüssig verriegelt wird.

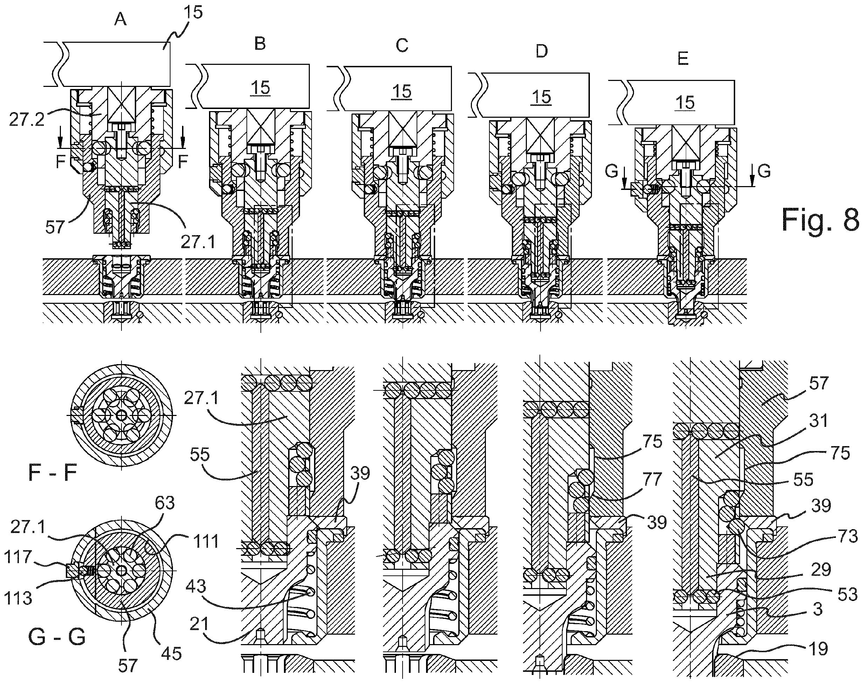

Zu diesem Zweck sind in dem Zapfen 27 mehrere U-förmige "Kanäle" für Kugeln 73 ausgebildet. Die Kanäle bestehen jeweils aus zwei kurzen Querbohrungen 71 und einer diese Bohrungen 71 verbindenden Längsbohrung 69. In dem linken Teil der Figur 7 ist gut zu erkennen, dass in den drei Bohrungen 71, 69 drei Kugeln 73 aufgenommen sind. Des Weiteren ist in der Figur 7 und in den Darstellungen "D" und "E" der Figur 8 gut zu erkennen, dass die Bohrungen 69 und 71 so bemessen sind, dass immer mindestens eine der Kugeln 73 in radialer Richtung etwas über den Außendurchmesser des zweiten Abschnitts 31 des Zapfens 27 hinausragt.

In dem Gehäuse 57 ist ein mit den Kugeln 73 zusammenwirkendender Freiraum 75 mit einer Führungsschräge 77 ausgebildet (siehe auch Figur 7). Dies führt dazu, dass bei einer ausreichend großen Relativbewegung des Zapfens 27 relativ zu dem Gehäuse 57 die in Figuren 7 und 8 oberste Kugel 73 durch die Führungsschräge 77 in die Bohrung 71 gedrückt wird und infolgedessen die unterste Kugel 73 radial nach außen gedrückt wird.

Anhand der verschiedenen Darstellungen "A" bis "E" der Figur 8 wird die Wirkungsweise dieser zweiten Verriegelungseinrichtung deutlich. In den Darstellungen "A", "B", "C" und "D" verhält sich diese Antriebseinrichtung 17 wie das zweite Ausführungsbeispiel gemäß den Figuren 5 und 6.

Wenn nun, wie in "E" dargestellt, der zweite Abschnitt 31 des Zapfens 27 sich relativ zu dem Gehäuse 57 so weit bewegt hat (in der Figur 8 nach unten), dass die Führungsschräge 77 am unteren Ende des Freiraums 75 die oberste Kugel 73 nach innen in die Querbohrung 71 drückt, wird die unterste Kugel 73 radial nach außen und unter eine Schräge der Führungsplatte 39 gedrückt. Dadurch ergibt sich eine formschlüssige Verbindung zwischen der Antriebseinrichtung 17 und der Führungsplatte 39 und damit auch des angetriebenen Werkzeughalters 1.

Die erste Verriegelungseinrichtung und die zweite Verriegelungseinrichtung sind konstruktiv so ausgelegt, dass sie nacheinander aktiv werden und mit dem Verriegeln der zweiten Verriegelungseinrichtung der Maschinenbediener visuelle und taktile Rückmeldung erhält, dass die Antriebseinrichtung 17 bzw. der Bedienschlüssel 13 korrekt und vollständig in die Betätigungseinrichtung 9 des Werkzeughalters 1 eingeführt wurde. Damit die Antriebseinrichtung 17 in der verriegelten Position verbleibt, ist ein Sperrspannwerk notwendig. Eine mögliche Ausführungsform des Sperrspannwerks ist in den Bildern "A" bis "E" und dem zu "E" gehörenden Schnitt entlang der Linie G - G dargestellt. Am Innendurchmesser der Hülse 45 ist ein Einstich 111 vorhanden. In dem Gehäuse 57 ist eine federbelastete Kugel 113 in einem Sackloch 115 angeordnet. Die Feder 113 drückt die Kugel 113 gegen den Innendurchmesser der Hülse 45. Wenn die die Antriebseinrichtung 17 die verriegelte Position erreichte, befinden sich die Kugel 113 und der Einstich 111 auf gleicher Höhe (Siehe die Darstellung "E" in Figur 8) und die Kugel 113 wird von der Feder in den Einstich 111 gedrückt. Das Sperrspannwerk ist aktiv und arretiert die Antriebseinrichtung 17 in der verriegelten Position. Zum Entsperren ist ein Löseknopf 117 vorgesehen. In den Figuren 9 und Figur 10 ist ein viertes Ausführungsbeispiel einer erfindungsgemäßen Antriebs- und Verriegelungseinrichtung 17 in verschiedenen Ansichten dargestellt.

In dieses vierte Ausführungsbeispiel sind zwei Verriegelungseinrichtungen und ein Sperrspannwerk integriert. Die erste Verriegelungseinrichtung, welche den ersten Abschnitt 29 des Zapfens 27 mit dem Bolzen 21 eines Werkzeughalters 1 verriegelt, entspricht der bereits zuvor anhand des zweiten und dritten Ausführungsbeispiels beschriebenen Verriegelung.

Die zweite Verriegelungseinrichtung, welche die Antriebseinrichtung 17 mit dem Gehäuse 3 des Werkzeughalters 1, genauer gesagt, mit der Führungsplatte 39 des Werkzeughalters 1, koppelt, nutzt zumindest zwei Spreizbacken 79, um die Antriebseinrichtung 17 mit dem Gehäuse 3 des angetriebenen Werkzeughalters 1 zu verriegeln. Das Sperrspannwerk kann auch mit anderen ersten und zweiten Verriegelungseinrichtungen kombiniert werden.

In der Figur 9 sind die Spreizbacken 79 in einer Isometrie dargestellt. Sie weisen an ihrem unteren Ende jeweils eine radial nach außen ragende umlaufende Rippe 81 auf. Die Rippe 81 wird unter die Führungsplatte 39 des Werkzeughalters 1 geschoben und dadurch die Verriegelung hergestellt.

Wie man aus der Schnittdarstellung des Zapfens 27 und des Gehäuses 57 des vierten Ausführungsbeispiels in der Figur 9 erkennen kann, sind an dem Zapfen 27 ein erster Bund 83, ein zylindrischer Abschnitt 85, eine Anlaufschräge 87 und ein zweiter Bund 89 ausgebildet. Der erste Bund 83 und der zweite Bund 89 begrenzen die Relativbewegung der Spreizbacken 79 bezogen auf den Zapfen 27. Über die Anlaufschräge 87 werden die Spreizbacken 79 in radialer Richtung auseinandergetrieben und somit die Rippen 81 unter die Führungsplatte 39 des Werkzeughalters 1 geschoben. Dadurch wir die Verriegelung aktiviert.

Die Innenkontur der Spreizbacken 79 entspricht der Außenkontur des Zapfens 27. Insbesondere ist ein Innendurchmesser der Spreizbacken 79 auf den Durchmesser des zylindrischen Abschnitts 85 abgestimmt. An dem oberen Ende in der Figur 9 weisen die Spreizbacken 79 eine kegelstumpfförmige Fläche 93 auf, die mit der Anlaufschräge 87 des Zapfens 27 zusammenwirkt.

Insgesamt ist die Länge der Spreizbacken 79 geringer als der Abstand zwischen dem ersten Bund 83 und dem zweiten Bund 89, so dass sich die Spreizbacken 79 in axialer Richtung relativ zu dem Zapfen 27 bewegen können.

Im linken oberen Teil der Figur 9 ist ein Längsschnitt durch dieses vierte Ausführungsbeispiel dargestellt. Aus dieser Darstellung ergibt sich, dass das Gehäuse 57 am unteren Ende einen Absatz 95 aufweist. Der Absatz 95 ist so bemessen, dass er als Führung für den ersten Bund 83 dient. Andererseits dient er auch dazu, die Spreizbacken 79 und insbesondere deren Rippen 81 so zu positionieren, dass der von den Rippen 81 gebildete Außendurchmesser kleiner ist als die Durchgangsöffnung in der Führungsplatte 39 des angetriebenen Werkzeughalters. Nur dann nämlich können die Spreizbacken 79 mit ihren Rippen 81 in die Durchgangsöffnung 41 der Führungsplatte 39 eingeführt werden. Die Spreizbacken 79 werden von einer umlaufenden Wurmfeder 80 zusammengehalten und legen sich hierdurch an den zylindrischen Abschnitt 85 und die Anlaufschräge 87 an.

Wenn man nun den Zapfen 27 relativ zu dem Gehäuse 57 in der Figur 9 nach unten bewegt und die Spreizbacke auf den Absatz 95 aufläuft, dann führt das Zusammenwirken zwischen der Anlaufschräge 87 und dem Kegel 93 der Spreizbacken 79 dazu, dass die Spreizbacken radial nach außen gedrängt werden, so dass die Rippen 81 die Führungsplatte 39 hintergreifen. Damit ist die gewünschte zweite Verriegelung etabliert.

Dieser Ablauf ist in der Figur 10 in den Darstellungen "A" bis "F" dargestellt. Die Funktionsweise dieses Ausführungsbeispiels einer zweiten Verriegelungseinrichtung ist insbesondere anhand eines Vergleichs der Darstellungen "D" und "E" gut zu erkennen. In der Darstellung "D" haben die Rippen 81 der Spreizbacke 79 noch den gleichen Durchmesser, wie der erste Bund 83 des Zapfens 27.

In der in "E" dargestellten Position hat die Anlaufschräge 87 die Spreizbacken radial nach außen gedrückt, so dass die Rippen 81 der Spreizbacken 79 die Führungsplatte 39 des Werkzeughalters 1 hintergreifen und somit die Verriegelung etabliert ist.

In dem vierten Ausführungsbeispiel gemäß der Figuren 9 und 10 ist zusätzlich zu der ersten Verriegelungseinrichtung und der zweiten Verriegelungseinrichtung noch ein Sperrspannwerk integriert. Dieses Sperrspannwerk dient dazu, die Position von Zapfen 27 und Gehäuse 57 zu fixieren, wenn die erste Verriegelungseinrichtung und die zweite Verriegelungseinrichtung aktiv sind und somit die erfindungsgemäße Betätigungseinrichtung mit dem Werkzeughalter 1 formschlüssig verbunden ist.

Rechts oben in der Figur 9 sind der Zapfen 27 und eine Hülse 97 im Schnitt dargestellt. Der Zapfen 27 ist bei diesem Ausführungsbeispiel einteilig. Die Hülse 97 ist mit dem Zapfen 27 durch ein Gewinde verbunden. Die Hülse 97 ist koaxial zu dem Zapfen 27 angeordnet. In der Hülse 97 sind eine oder mehrere Querbohrungen 99 vorhanden. Der Durchmesser der Querbohrungen 99 ist größer als die Wandstärke der Hülse 97, sodass eine in die Querbohrung 99 eingesetzte Sperrkugel 101 (siehe die Figur 9 links oben) entweder rechts oder links über das Ende der Querbohrung 99 hinausragt.

Wie der Längsschnitt im linken Teil der Figur 9 veranschaulicht, ist in dem Gehäuse 57 ein Einstich 103 ausgebildet. In einer Spannstellung des Sperrspannwerks (siehe Ansicht "E" in der Figur 10) befinden sich die Querbohrungen 99 auf gleicher Höhe wie der Einstich 103. Dann ist es möglich, die Sperrkugel 101 in den Einstich 103 zu drücken, so dass über die Hülse 97 eine in axialer Richtung formschlüssige Verbindung zwischen Gehäuse 57 und dem Zapfen 27 entsteht.

Die Sperrkugel 101 wird durch eine Schiebemuffe 105 in den Einstich 103 gedrückt, die auf der Hülse 97 axial verschiebbar geführt ist. In der Figur 9 ist die Schiebemuffe 105 in ihrer oberen Position dargestellt. Die Schiebemuffe 105 hat an ihrem unteren Ende innen eine Durchmessererweiterung 107, die etwa gleich tief ist, wie der Einstich 103 im Gehäuse 57.

In der Figur 9 befindet sich die Sperrkugel 101 größtenteils in der Querbohrung 99 und ein kleiner Teil der Sperrkugel 101 ragt in die Durchmessererweiterung 107 der Schiebemuffe 105, so dass die Sperrkugel 101 in radialer Richtung nicht nach innen über den Innendurchmesser der Hülse 97 hinausragt. Das verhindert der Außendurchmesser des Gehäuses 57, der auf den Innendurchmesser der Hülse 97 abgestimmt ist.

In der Figur 10 ist das vierte Ausführungsbeispiel in sechs verschiedenen Positionen "A" bis "F" dargestellt. Mit Bezug auf das Spannwerk sind die Darstellungen "E", "D" und "F" von besonderem Interesse.

In der Darstellung "D" fluchten die Querbohrungen 99 und der Einstich 103 im Gehäuse 57 noch nicht, so dass es nicht möglich ist, die Schiebemuffe 105 nach unten relativ zu der Hülse 97 zu schieben und die Sperrkugel 101 radial nach innen in Richtung des Gehäuses 57 zu bewegen.

In der Darstellung "E" fluchten die Querbohrungen 99 und der Einstich 103, so dass es nun möglich ist, die Schiebemuffe 105 relativ zu der Hülse 97 nach unten zu bewegen und auf diese Weise die Sperrkugel 101 in die Vertiefung 103 zu drücken. Dadurch werden die Hülse 97 und mit ihr der Zapfen 27 relativ zu dem Gehäuse 57 verriegelt. Dies bedeutet, dass trotz der Druckfeder 109 zwischen Zapfen 27 und Gehäuse 57, der Zapfen 27 seine Position (Spannposition) nicht verändert. Dies geschieht erst, wenn die Schiebemuffe 105 relativ zu der Hülse 97 nach oben bewegt wird, wie dies in der Darstellung "F" der Figur 10 gezeigt ist. Dann ist das Sperrspannwerk entriegelt.

## Patentansprüche

1. Antriebs- und Verriegelungseinrichtung (17) zur Übertragung von Drehmomenten auf eine Betätigungseinrichtung (9) eines angetriebenen oder stehenden Werkzeughalters (1), wobei die Antriebs- und Verriegelungseinrichtung (17) einen Zapfen (27) aufweist, wobei ein erster Abschnitt (29) des Zapfens (27) zur formschlüssigen Drehmomentübertragung zwischen Antriebs- und Verriegelungseinrichtung (17) und einem Werkzeughalter (1) ausgebildet ist und erste Verriegelungsmittel (33) aufweist, **dadurch gekennzeichnet, dass** ein zweiter Abschnitt (31) des Zapfens (27) zweite Verriegelungsmittel (37) aufweist, und dass der zweite Abschnitt (31) als Zylinder ausgebildet ist.

2. Antriebs- und Verriegelungseinrichtung (17) nach Anspruch 1, **dadurch gekennzeichnet, dass** die ersten Verriegelungsmittel (33) und die zweiten Verriegelungsmittel (37) so konfiguriert sind, dass sie nacheinander aktiviert und deaktiviert werden.

3. Antriebs- und Verriegelungseinrichtung (17) nach einem der vorhergehenden Ansprüche, **dadurch gekennzeichnet, dass** sie eine Antriebsseite und eine Abtriebsseite aufweist, und dass auf der Antriebsseite eine Schnittstelle (25) zu einer Drehmoment abgebenden Vorrichtung vorhanden ist.

4. Antriebs- und Verriegelungseinrichtung (17) nach Anspruch 3, **dadurch gekennzeichnet, dass** der erste Abschnitt (29) auf der Abtriebsseite als Drehmoment übertragende Schnittstelle zu einer Betätigungseinrichtung (9) eines Werkzeughalters (1) ausgebildet ist.

5. Antriebs- und Verriegelungseinrichtung (17) nach Anspruch 3 oder 4, **dadurch gekennzeichnet, dass** die Drehmoment übertragende Schnittstelle (25) mit einem Drehmomentschlüssel (15), einem Hebel, einem Schraubendreher, einem Schrauber oder einer Schnittstelle eines Industrieroboters kompatibel ist.

6. Antriebs- und Verriegelungseinrichtung (17) nach einem der vorhergehenden Ansprüche, **dadurch gekennzeichnet, dass** die ersten Verriegelungsmittel und/oder die zweiten Verriegelungsmittel als Federring (33, 37), federbelastete Maschinenelemente, federbelastete Kugel oder federbelastete Bolzen ausgebildet sind.

7. Antriebs- und Verriegelungseinrichtung (17) nach einem der vorhergehenden Ansprüche, **dadurch gekennzeichnet, dass** der Zapfen (27) in einer Führungsbohrung (60) eines Gehäuses (57) axial verschiebbar geführt ist, dass die ersten Verriegelungsmittel eine erste Radialbohrung (47), eine zweite Radialbohrung (49) und zumindest eine die Radialbohrungen (47, 49) verbindende Bohrung (51) umfassen, dass in den Radialbohrungen (47, 49) Kugeln (53), federbelastete Maschinenelemente, insbesondere federbelastete Bolzen, ausgebildet sind und in der Bohrung (51) ein Stift (55) oder mehrere Kugeln aufgenommen sind, dass die Positionen der Kugeln (53) in den Radialbohrungen (47, 49) durch den Stift (55), Kugeln in der Bohrung (51) oder andere Übertragungsmittel derart miteinander gekoppelt sind, dass entweder mindestens eine Kugel (53) in der ersten Radialbohrung (47) oder mindestens eine Kugel (53) in der zweiten Radialbohrung (49) in radialer Richtung über den Zapfen (27) teilweise hinausragt, dass in der Führungsbohrung (60) des Gehäuses (57) ein Einstich (58) vorhanden ist, und dass in einer Offenstellung der ersten Verriegelungsmittel mindestens eine Kugel (53) der zweiten Radialbohrung (49) teilweise in den Einstich (58) ragt ist.

8. Antriebs- und Verriegelungseinrichtung (17) nach einem der vorhergehenden Ansprüche, **dadurch gekennzeichnet, dass** der Zapfen (27) in einer Bohrung eines Gehäuses (57) axial verschiebbar geführt ist, dass die zweiten Verriegelungsmittel Querbohrungen (71) und eine Längsbohrung (69) umfassen, wobei diese Bohrungen einen U-förmigen Kanal bilden, dass in jeder Bohrung (69, 71) mindestens eine Kugel (73) aufgenommen ist, dass die Positionen der Kugeln (73) in den Bohrungen (71, 69) derart miteinander gekoppelt sind, dass eine Kugel (73) in einer der Querbohrungen (71) in radialer Richtung etwas über einen Führungsabschnitt (72) des Zapfens (27) hinausragt, und dass in dem Gehäuse (57) der Freiraum (75) mit einer Führungsschräge (77) vorgesehen ist, dass in einer Offenstellung der zweiten Verriegelungsmittel eine Kugel (73) in einer ersten Querbohrung (71) teilweise in den Freiraum (75) ragt, und dass in einer verriegelten Stellung der zweiten Verriegelungsmittel die Kugel (73) in der ersten Querbohrung (71.1) in radialer nicht über den Führungsabschnitt (72) des Zapfens (27) hinausragt.

9. Antriebs- und Verriegelungseinrichtung (17) nach einem der Ansprüche 1, 2, 3, 4 oder 5, **dadurch gekennzeichnet, dass** die zweiten Verriegelungsmittel mindestens zwei Spreizbacken (79) umfassen, dass an dem Zapfen (27) ein erster Bund (83), ein zylindrischer Abschnitt (85), eine kegelstumpfförmige Anlaufschräge (87) und ein zweiter Bund (89) ausgebildet sind, dass eine Innenkontur der Spreizbacken (79) komplementär zu dem zylindrischen Abschnitt (85) und der kegelstumpfförmigen Anlaufschräge (87) ausgebildet ist, und dass die Spreizbacken (79) an ihrem dem Konus (93) gegenüberliegenden Ende eine umlaufende Rippe (81) aufweisen.

10. Antriebs- und Verriegelungseinrichtung (17) nach einem der vorhergehenden Ansprüche, **dadurch gekennzeichnet, dass** der Zapfen (27) zweiteilig ausgeführt ist, wobei die Antriebsseite an einem zweiten Teil (27.2) und die Abtriebsseite an einem ersten Teil (27.1) des Zapfens (27) ausgebildet ist, dass der erste Teil (27.1) und der zweite Teil (27.2) des Zapfens (27) koaxial zueinander in dem Gehäuse (57) angeordnet und geführt sind, und dass zwischen erstem Teil (27.1) und zweitem Teil (27.2) des Zapfens (27) eine schaltbare Kupplung vorhanden ist.

11. Antriebs- und Verriegelungseinrichtung (17) nach Anspruch 10, **dadurch gekennzeichnet, dass** die schaltbare Kupplung mindestens eine Vertiefung (59) in dem ersten Teil (27.1) und mindestens eine Querbohrung (61) in dem zweiten Teil (27.2) umfasst, dass die Vertiefungen (59) in der Kuppelstellung in einer Verlängerung der Querbohrungen (61) angeordnet sind, dass in den Querbohrungen (61) jeweils eine Kugel (63) vorgesehen ist, dass in dem Gehäuse (57) ein Bereich (65) mit einer Anlaufschräge (67) vorgesehen ist.

12. Antriebs- und Verriegelungseinrichtung (17) nach einem der vorhergehenden Ansprüche, **dadurch gekennzeichnet, dass** es ein Sperrspannwerk aufweist, welches die Position des Zapfens (27) relativ zu dem Gehäuse (57) in zwei stabilen Lagen hält.

13. Antriebs- und Verriegelungseinrichtung (17) nach Anspruch 12 **dadurch gekennzeichnet, dass** das Sperrspannwerk eine Hülse (45) mit einer Innenbohrung umfasst, dass in der Innenbohrung der Hülse (45) ein Einstich (111) vorgesehen ist, dass in dem Gehäuse (57) ein Sackloch ausgebildet ist, das eine federbelastete Kugel (113) aufnimmt, dass sich die federbelastete Kugel (113) und der Einstich (111) auf einer Höhe befinden, wenn sich die Antriebs- und Verriegelungseinrichtung (17) in der Verriegelungsstellung befindet, dass in der Hülse (45) ein Löseknopf (117) zum Entsperren des Sperrspannwerks vorgesehen ist, und dass durch Betätigen des Löseknopfs (117) die federbelastete Kugel (113) aus dem Einstich (111) gedrückt wird.

14. Antriebs- und Verriegelungseinrichtung (17) nach Anspruch 13, **dadurch gekennzeichnet, dass** das Sperrspannwerk eine Hülse (97) mit einer Innenbohrung und einer zylindrischen Führungsfläche umfasst, dass in der Hülse (97) mindestens eine Querbohrung (99) zur Aufnahme einer Sperrkugel (101) vorgesehen ist, dass die Querbohrungen (99) kürzer als der Durchmesser der Sperrkugeln (101) sind, dass in dem Gehäuse (57) ein Einstich (103) ausgebildet ist, dass sich die Querbohrungen (99) und die Sperrkugeln (101) auf einer Höhe befinden, wenn die Antriebs- und Verriegelungseinrichtung (17) sich in der Verriegelungsstellung befindet, dass auf der Führungsfläche der Hülse (97) eine Schiebemuffe (105) axial verschiebbar geführt ist, und dass durch Verschieben der Schiebemuffe (105) die Sperrkugeln (101) in den Einstich (103) des Gehäuses (57) gedrückt werden.

15. Antriebs- und Verriegelungseinrichtung (17) nach Anspruch 14, **dadurch gekennzeichnet, dass** die Hülse (97) mit dem Zapfen (27) verbunden ist oder der Zapfen (27) und die Hülse (97) einteilig ausgeführt sind.

16. Antriebs- und Verriegelungseinrichtung (17) nach einem der vorhergehenden Ansprüche, **dadurch gekennzeichnet, dass** die Antriebs- und Verriegelungseinrichung (17) und die Drehmoment abgebende Einrichtung einstückig ausgebildet sind.

17. Bedienschlüssel (13) bestehend aus einer Antriebs- und Verriegelungseinrichtung (17) nach einem der vorhergehenden Ansprüche und einem Drehmomentschlüssel (15) .

18. Verfahren zum automatisierten Werkzeugwechsel bei einem Werkzeughalter (1) umfassend die Schritte:
- Verbinden einer Antriebs- und Verriegelungseinrichtung (17) nach einem der Ansprüche 1 bis 16 mit einem Industrieroboter oder einer Handhabungseinrichtung,
- Einführen der Antriebs- und Verriegelungseinrichtung (17) in eine Betätigungseinrichtung (9) des Werkzeughalters (1),
- Verriegeln der Antriebs- und Verriegelungseinrichtung (17) mit dem Werkzeughalter (1),
- Lösen des Werkzeugs,
- Wechseln des Werkzeugs,
- Spannen des Werkzeugs,
- Entriegeln und Entfernen der Antriebs- und Verriegelungseinrichtung (17) aus dem Werkzeughalter (1) .

19. Verfahren nach Anspruch 18, **dadurch gekennzeichnet, dass** nach dem Lösen des Werkzeugs (1) die Verbindung zwischen Antriebs- und Verriegelungseinrichtung (17) und dem Industriebroboter oder der Handhabungseinrichtung getrennt wird, dass der Werkzeugwechsel mit dem Industrieroboter oder der Handhabungseinrichtung durchgeführt wird, und dass anschließend der Industrieroboter oder die Handhabungseinrichtung wieder mit der Antriebs- oder Verriegelungseinrichtung (17) verbunden wird.

## Claims

1. Drive and locking device (17) for transmitting torques to an operating device (9) of a driven or stationary tool holder (1), the drive and locking device (17) having a pin (27), a first portion (29) of the pin (27) being designed for form-fitting torque transmission between the drive and locking device (17) and a tool holder (1) and having first locking means (33), **characterized in that** a second portion (31) of the pin (27) has second locking means (37), and **in that** the second portion (31) is in the form of a cylinder.

2. Drive and locking device (17) according to claim 1, **characterized in that** the first locking means (33) and the second locking means (37) are configured such that they activated and deactivated one after the other.

3. Drive and locking device (17) according to any of the preceding claims, **characterized in that** said device has a drive end and an output end, and **in that** an interface (25) with a torque-providing apparatus is provided on the drive end.

4. Drive and locking device (17) according to claim 3, **characterized in that** the first portion (29) on the output end is in the form of a torque-transmitting interface with an operating device (9) of a tool holder (1).

5. Drive and locking device (17) according to claim 3 or 4, **characterized in that** the torque-transmitting interface (25) is compatible with a torque wrench (15), a lever, a screwdriver, a wrench or an interface of an industrial robot.

6. Drive and locking device (17) according to any of the preceding claims, **characterized in that** the first locking means and/or the second locking means are in the form of a spring ring (33, 37), spring-loaded machine elements, spring-loaded balls or spring-loaded bolts.

7. Drive and locking device (17) according to any of the preceding claims, **characterized in that** the pin (27) extends axially slidably in a guide bore (60) in a housing (57), **in that** the first locking means comprises a first radial bore (47), a second radial bore (49) and at least one bore (51) connecting the radial bores (47, 49), **in that** balls (53), spring-loaded machine elements, in particular spring-loaded bolts, are formed in the radial bores (47, 49), and a peg (55) or a plurality of balls are received in the bore (51) such that the positions of the balls (53) in the radial bores (47, 49) are coupled to one another by the pin (55), balls in the bore (51) or other transmission means such that either at least one ball (53) in the first radial bore (47) or at least one ball (53) in the second radial bore (49) projects in part beyond the pin (27) in a radial direction, **in that** a recess (58) is provided in the guide bore (60) in the housing (57), and **in that**, in an open position of the first locking means, at least one ball (53) of the second radial bore (49) projects in part into the recess (58).

8. Drive and locking device (17) according to any of the preceding claims, **characterized in that** the pin (27) extends axially slidably in a bore in a housing (57), **in that** the second locking means comprise transverse bores (71) and a longitudinal bore (69), these bores forming a U-shaped channel, **in that** at least one ball (73) is received in each bore (69, 71), **in that** the positions of the balls (73) in the bores (71, 69) are coupled to one another such that a ball (73) in one of the transverse bores (71) projects slightly beyond a guide portion (72) of the pin (27) in the radial direction, and **in that**, in the housing (57), the free space (75) is provided with a guide bevel (77), **in that**, in an open position of the second locking means, a ball (73) in a first transverse bore (71) projects in part into the free space (75), and **in that**, in a locked position of the second locking means, the ball (73) in the first transverse bore (71.1) does not project radially beyond the guide portion (72) of the pin (27) .

9. Drive and locking device (17) according to any of claims 1, 2, 3, 4 or 5, **characterized in that** the second locking means comprise at least two expanding jaws (79), **in that** a first collar (83), a cylindrical portion (85), a frustoconical run-on bevel (87) and a second collar (89) are formed on the pin (27), **in that** an inner contour of the expanding jaws (79) is designed to be complementary to the cylindrical portion (85) and the frustoconical run-on bevel (87), and **in that** the expanding jaws (79) have a circumferential rib (81) at their end opposite the cone (93) .

10. Drive and locking device (17) according to any of the preceding claims, **characterized in that** the pin (27) is made in two parts, the drive end being formed on a second part (27.2) and the output end being formed on a first part (27.1) of the pin (27), **in that** the first part (27.1) and the second part (27.2) of the pin (27) are arranged and extend coaxially with one another in the housing (57), and **in that** a switchable coupling is provided between the first part (27.1) and the second part (27.2) of the pin (27) .

11. Drive and locking device (17) according to claim 10, **characterized in that** the switchable coupling comprises at least one depression (59) in the first part (27.1) and at least one transverse bore (61) in the second part (27.2), **in that** the depressions (59) are arranged, in the coupling position, in an extension of the transverse bores (61), **in that** a ball (63) is provided in each of the transverse bores (61), **in that** a region (65) having a run-on bevel (67) is provided in the housing (57). (Switchable coupling, solution B and C)

12. Drive and locking device (17) according to any of the preceding claims, **characterized in that** said device has a locking-clamping mechanism which holds the position of the pin (27) relative to the housing (57) in two stable positions.

13. Drive and locking device (17) according to claim 12, **characterized in that** the locking-clamping mechanism comprises a sleeve (45) having an inner bore, **in that** a recess (111) is provided in the inner bore in the sleeve (45), **in that**, in the housing (57), a blind hole is formed which receives a spring-loaded ball (113), **in that** the spring-loaded ball (113) and the recess (111) are at the same level when the drive and locking device (17) is in the locking position, **in that** a release button (117) for unlocking the locking-clamping mechanism is provided in the sleeve (45), and **in that** the spring-loaded ball (113) is pressed out of the recess (111) by operating the release button (117).

14. Drive and locking device (17) according to claim 13, **characterized in that** the locking-clamping mechanism comprises a sleeve (97) having an inner bore and a cylindrical guide surface, **in that** at least one transverse bore (99) for receiving a locking ball (101) is provided in the sleeve (97), **in that** the transverse bores (99) are shorter than the diameter of the locking balls (101), **in that** a recess (103) is formed in the housing (57), **in that** the transverse bores (99) and the locking balls (101) are at the same level when the drive and locking device (17) is in the locking position, **in that** a sliding coupling (105) extends axially slidably on the guide surface of the sleeve (97), and **in that**, by sliding the sliding coupling (105), the locking balls (101) are pressed into the recess (103) in the housing (57).

15. Drive and locking device (17) according to claim 14, **characterized in that** the sleeve (97) is connected to the pin (27) or the pin (27) and the sleeve (97) are made in one piece.

16. Drive and locking device (17) according to any of the preceding claims, **characterized in that** the drive and locking device (17) and the torque-providing device are formed in one piece.

17. Operating key (13) consisting of a drive and locking device (17) according to any of the preceding claims and a torque wrench (15).

18. Method for automated tool change in a tool holder (1), the method comprising the steps of:
- connecting a drive and locking device (17) according to any of claims 1 to 16 to an industrial robot or a handling device;
- inserting the drive and locking device (17) into an operating device (9) of the tool holder (1);
- locking the drive and locking device (17) to the tool holder (1);
- releasing the tool;
- changing the tool;
- clamping the tool; and
- unlocking and removing the drive and locking device (17) from the tool holder (1).

19. Method according to claim 18, **characterized in that** after the tool (1) has been released, the drive and locking device (17) and the industrial robot or the handling device are disconnected, **in that** the tool change is carried out by means of the industrial robot or the handling device, and **in that** the industrial robot or the handling device is subsequently reconnected to the drive or locking device (17).

## Revendications

1. Dispositif d'entraînement et de verrouillage (17) permettant de transmettre des couples à un dispositif d'actionnement (9) d'un porte-outil (1) entraîné ou fixe, dans lequel le dispositif d'entraînement et de verrouillage (17) présente une broche (27), dans lequel une première section (29) de la broche (27) est conçue pour transmettre un couple par complémentarité de forme entre le dispositif d'entraînement et de verrouillage (17) et un porte-outil (1) et présente des premiers moyens de verrouillage (33), **caractérisé en ce qu'**une seconde section (31) de la broche (27) présente des seconds moyens de verrouillage (37), et **en ce que** la seconde section (31) est réalisée sous forme de cylindre.

2. Dispositif d'entraînement et de verrouillage (17) selon la revendication 1, **caractérisé en ce que** les premiers moyens de verrouillage (33) et les seconds moyens de verrouillage (37) sont configurés de sorte qu'ils sont successivement activés et désactivés.

3. Dispositif d'entraînement et de verrouillage (17) selon l'une quelconque des revendications précédentes, **caractérisé en ce qu'**il présente un côté entraînement et un côté sortie, et **en ce qu'**une interface (25) relative à un dispositif producteur de couple est prévue sur le côté entraînement.

4. Dispositif d'entraînement et de verrouillage (17) selon la revendication 3, **caractérisé en ce que** la première section (29) est réalisée sur le côté sortie sous forme d'interface de transmission de couple relative à un dispositif d'actionnement (9) d'un porte-outil (1).

5. Dispositif d'entraînement et de verrouillage (17) selon la revendication 3 ou 4, **caractérisé en ce que** l'interface de transmission de couple (25) est compatible avec une clé dynamométrique (15), un levier, un tournevis, une visseuse ou une interface d'un robot industriel.

6. Dispositif d'entraînement et de verrouillage (17) selon l'une quelconque des revendications précédentes, **caractérisé en ce que** les premiers moyens de verrouillage et/ou les seconds moyens de verrouillage sont réalisés sous forme de rondelle-ressort (33, 37), d'éléments de machine sur ressort, de bille à ressort ou de boulon à ressort.

7. Dispositif d'entraînement et de verrouillage (17) selon l'une quelconque des revendications précédentes, **caractérisé en ce que** la broche (27) est guidée de manière à pouvoir coulisser axialement dans un alésage de guidage (60) d'un boîtier (57), **en ce que** les premiers moyens de verrouillage comprennent un premier alésage radial (47), un second alésage radial (49) et au moins un alésage (51) reliant les alésages radiaux (47, 49), **en ce que** des billes (53), des éléments de machine sur ressort, en particulier des boulons à ressort, sont réalisés dans les alésages radiaux (47, 49) et une cheville (55) ou plusieurs billes est/sont accueillie(s) dans l'alésage (51), **en ce que** les positions des billes (53) dans les alésages radiaux (47, 49) sont couplées les unes aux autres grâce à la cheville (55), aux billes de l'alésage (51) ou à d'autres moyens de transmission de telle manière qu'au moins une bille (53) du premier alésage radial (47) ou au moins une bille (53) du second alésage radial (49) fait saillie partiellement dans la direction radiale au-delà de la broche (27), **en ce qu'**une gorge (58) est présente dans l'alésage de guidage (60) du boîtier (57), et **en ce que**, dans une position d'ouverture des premiers moyens de verrouillage, au moins une bille (53) du second alésage radial (49) fait saillie partiellement dans la gorge (58).

8. Dispositif d'entraînement et de verrouillage (17) selon l'une quelconque des revendications précédentes, **caractérisé en ce que** la broche (27) est guidée de manière à pouvoir coulisser axialement dans un alésage d'un boîtier (57), **en ce que** les seconds moyens de verrouillage comprennent des alésages transversaux (71) et un alésage longitudinal (69), dans lequel lesdits alésages forment un canal en forme de U, **en ce qu'**au moins une bille (73) est accueillie dans chaque alésage (69, 71), **en ce que** les positions des billes (73) dans les alésages (71, 69) sont couplées les unes aux autres de telle manière qu'une bille (73) fait saillie dans l'un des alésages transversaux (71) dans la direction radiale un peu au-delà d'une section de guidage (72) de la broche (27), et **en ce que** l'espace libre (75) est muni d'un chanfrein de guidage (77) dans le boîtier (57), **en ce que**, dans une position d'ouverture des seconds moyens de verrouillage, une bille (73) d'un premier alésage transversal (71) fait saillie partiellement dans l'espace libre (75), et **en ce que**, dans une position de verrouillage des seconds moyens de verrouillage, la bille (73) du premier alésage transversal (71.1) ne fait pas saillie au-delà de la section de guidage (72) de la broche (27) dans la direction radiale.

9. Dispositif d'entraînement et de verrouillage (17) selon l'une quelconque des revendications 1, 2, 3, 4 ou 5, **caractérisé en ce que** les seconds moyens de verrouillage comprennent au moins deux mâchoires d'écartement (79), **en ce qu'**une première collerette (83), une section cylindrique (85), un chanfrein tronconique (87) et une seconde collerette (89) sont formés au niveau de la broche (27), **en ce qu'**un contour intérieur des mâchoires d'écartement (79) est formé de manière complémentaire à la section cylindrique (85) et au chanfrein tronconique (87), et **en ce que** les mâchoires d'écartement (79) présentent une nervure périphérique (81) au niveau de leur extrémité opposée au cône (93).

10. Dispositif d'entraînement et de verrouillage (17) selon l'une quelconque des revendications précédentes, **caractérisé en ce que** la broche (27) est réalisée en deux parties, dans lequel le côté entraînement est formé au niveau d'une seconde partie (27.2) et le côté sortie est formé au niveau d'une première partie (27.1) de la broche (27), **en ce que** la première partie (27.1) et la seconde partie (27.2) de la broche (27) sont agencées et guidées de manière coaxiale l'une par rapport à l'autre au sein du boîtier (57), et **en ce qu'**un couplage commutable est présent entre la première partie (27.1) et la seconde partie (27.2) de la broche (27).

11. Dispositif d'entraînement et de verrouillage (17) selon la revendication 10, **caractérisé en ce que** le couplage commutable comprend au moins un renfoncement (59) dans la première partie (27.1) et au moins un alésage transversal (61) dans la seconde partie (27.2), **en ce que**, dans la position de couplage, les renfoncements (59) sont agencés dans le prolongement des alésages transversaux (61), **en ce que** respectivement une bille (63) est prévue dans les alésages transversaux (61) et **en ce qu'**une région (65) présentant un chanfrein (67) est prévue au sein du boîtier (57).

12. Dispositif d'entraînement et de verrouillage (17) selon l'une quelconque des revendications précédentes, **caractérisé en ce qu'**il présente un mécanisme de verrouillage par serrage qui maintient la position de la broche (27) par rapport au boîtier (57) dans deux positions stables.

13. Dispositif d'entraînement et de verrouillage (17) selon la revendication 12, **caractérisé en ce que** le mécanisme de verrouillage par serrage comprend un manchon (45) avec un alésage intérieur, **en ce qu'**une gorge (111) est prévue dans l'alésage intérieur du manchon (45), **en ce qu'**un trou borgne accueillant une bille à ressort (113) est formé dans le boîtier (57), **en ce que** la bille à ressort (113) et la gorge (111) se trouvent à la même hauteur lorsque le dispositif d'entraînement et de verrouillage (17) se trouve dans la position de verrouillage, **en ce qu'**un bouton de déverrouillage (117) permettant de déverrouiller le mécanisme de verrouillage par serrage est prévu dans le manchon (45), et **en ce que** la bille à ressort (113) est pressée hors de la gorge (111) grâce à l'actionnement du bouton de déverrouillage (117).

14. Dispositif d'entraînement et de verrouillage (17) selon la revendication 13, **caractérisé en ce que** le mécanisme de verrouillage par serrage comprend un manchon (97) présentant un alésage intérieur et une surface de guidage cylindrique, **en ce qu'**au moins un alésage transversal (99) est prévu dans le manchon (97) afin d'accueillir une bille de verrouillage (101), **en ce que** les alésages transversaux (99) sont plus courts que le diamètre des billes de verrouillage (101), **en ce qu'**une gorge (103) est formée dans le boîtier (57), **en ce que** les alésages transversaux (99) et les billes de verrouillage (101) se trouvent à la même hauteur lorsque le dispositif d'entraînement et de verrouillage (17) se trouve dans la position de verrouillage, **en ce qu'**un raccord coulissant (105) est guidé sur la surface de guidage du manchon (97) de manière à pouvoir coulisser axialement, et **en ce que** les billes de verrouillage (101) sont pressées dans la gorge (103) du boîtier (57) grâce au coulissement du raccord coulissant (105).

15. Dispositif d'entraînement et de verrouillage (17) selon la revendication 14, **caractérisé en ce que** le manchon (97) est relié à la broche (27) ou la broche (27) et le manchon (97) sont réalisés d'un seul tenant.

16. Dispositif d'entraînement et de verrouillage (17) selon l'une quelconque des revendications précédentes, **caractérisé en ce que** le dispositif d'entraînement et de verrouillage (17) et le dispositif de transmission de couple sont réalisés d'une seule pièce.

17. Clé de service (13) constituée d'un dispositif d'entraînement et de verrouillage (17) selon l'une quelconque des revendications précédentes et d'une clé dynamométrique (15).

18. Procédé de changement automatisé d'outil dans un porte-outil (1), comprenant les étapes consistant à :
- relier un dispositif d'entraînement et de verrouillage (17) selon l'une quelconque des revendications 1 à 16 à un robot industriel ou à un dispositif de manipulation,
- insérer le dispositif d'entraînement et de verrouillage (17) dans un dispositif d'actionnement (9) du porte-outil (1),
- verrouiller le dispositif d'entraînement et de verrouillage (17) sur le porte-outil (1),
- desserrer l'outil,
- changer l'outil,
- serrer l'outil,
- déverrouiller et retirer le dispositif d'entraînement et de verrouillage (17) du porte-outil (1).

19. Procédé selon la revendication 18, **caractérisé en ce que**, après le desserrage de l'outil (1), la liaison entre le dispositif d'entraînement et de verrouillage (17) et le robot industriel ou le dispositif de manipulation est interrompue, **en ce que** le changement d'outil est mis en oeuvre à l'aide du robot industriel ou du dispositif de manipulation, et **en ce que** le robot industriel ou le dispositif de manipulation est ensuite à nouveau relié au dispositif d'entraînement ou de verrouillage (17).
